# EUROPÄISCHE PATENTANMELDUNG

(11) **EP 4 742 215 A1**
(43) Veröffentlichungstag der Anmeldung: **13.05.2026**
(21) Anmeldenummer: 25213594.2
(22) Anmeldetag: 05.11.2025
(51) Int. Cl.: G08G 1/16, B60W 30/09, B60W 30/095, B60W 60/00

(54) **AUTOMATISCH GEFÜHRTES TRANSPORTFAHRZEUG FÜR CONTAINER UND VERFAHREN ZUM BETREIBEN DESSELBEN**

(30) Priorität: 07.11.2024 DE 102024132534
(71) Anmelder: Konecranes Global Corporation, 05830 Hyvinkää (FI)
(72) Erfinder: Biro, George, 49549 Ladbergen (DE); Dr. Schmidt-Ewig, Jan Philipp, 45239 Essen (DE); Dr. Aldejohann, Stefan, 40764 Langenfeld (DE)
(74) Vertreter: Moser Götze & Partner Patentanwälte mbB

(57) **Zusammenfassung**

Die Erfindung betrifft ein Transportfahrzeug (1) für Container (12), das automatisch führbar ist und hierfür eine Fahrzeugsteuerung (13) aufweist, mittels derer eine Geschwindigkeit sowie eine Fahrtrichtung des Transportfahrzeugs (1) steuerbar sind, wobei das Transportfahrzeug (1) zumindest ein erstes Sensorsystem (14) zur Objekterkennung aufweist, das mit der Fahrzeugsteuerung (13) derart zusammenwirkt, dass in Abhängigkeit von Signalen des ersten Sensorsystems (14) eine Geschwindigkeit und/oder Fahrtrichtung des Transportfahrzeugs (1) automatisch veränderbar ist.

Um ein verbessertes automatisch geführtes Transportfahrzeug (1) bereit zu stellen, das besonders sicher betrieben werden kann, wird vorgeschlagen, dass das Transportfahrzeug (1) zusätzlich zur Fahrzeugsteuerung (13) ein Kollisionsvermeidungssteuerungssystem (16) aufweist, das eingerichtet ist, um in Abhängigkeit von Informationen über ein erkanntes Objekt (1, 17a, 17b, 18) und eine Betriebssituation des Transportfahrzeugs (1) zu entscheiden, ob zur Kollisionsvermeidung eine Veränderung der Geschwindigkeit und/oder Fahrtrichtung des Transportfahrzeugs (1) zu veranlassen ist.

Auch betrifft die Erfindung ein Verfahren zum Betreiben eines solchen Transportfahrzeugs (1).

## Beschreibung

Die Erfindung betrifft ein Transportfahrzeug für Container gemäß dem Oberbegriff von Anspruch 1 und ein Verfahren zum Betreiben eines solchen Transportfahrzeugs.

Transportfahrzeuge im Sinne der vorliegenden Anmeldung sind als Schwerlastfahrzeuge ausgebildete Flurförderfahrzeuge, die für die Handhabung und/oder den Transport von Containern ausgelegt sind. Die zu transportierenden beziehungsweise handzuhabenden Container können dementsprechend insbesondere im Fall von ISO-Containern im beladenen Zustand bis zu 40 t wiegen und normierte oder zumindest standardisierte Längen von zum Beispiel 10, 20, 40, 45, 53 oder 60 Fuß aufweisen. Die beiden letztgenannten Längen werden bisher als nicht ISO genormte Container ausschließlich in Nordamerika eingesetzt. In diesem Zusammenhang werden unter ISO-Containern genormte Großraumbeziehungsweise Seefrachtcontainer verstanden, die im internationalen Warenverkehr zum Einsatz kommen. In diesem Zusammenhang können Container auch andere normierte oder zumindest standardisierte Ladungsträger wie beispielsweise Wechselaufbauten, insbesondere Wechselbehälter oder Wechselbrücken, sein.

Entsprechende Transportfahrzeuge kommen insbesondere in umzäunten oder anderweitig gegenüber unkontrollierter Zufahrt abgeschlossenen bzw. abgegrenzten Betriebsbereichs oder Terminals, beispielsweise eines Hafenterminals, zum Einsatz. Hierbei sind die Transportfahrzeuge in den Umschlag von Containern zwischen mindestens zwei Transportmitteln gleicher oder unterschiedlicher Art eingebunden, beispielsweise zwischen Schiffen, Straßen- und/oder Schienenfahrzeugen. Dementsprechend erfolgt ein Be- und Entladen von Schiffen, und/oder Schienenfahrzeugen sowie entsprechender Transportfahrzeuge. In diesem Zusammenhang transportieren die nicht schienengebunden, sondern frei verfahrbaren Transportfahrzeuge die Container beispielsweise auf der Wasserseite eines Containerlagers des Terminals zwischen dem Containerlager und einer Containerbrücke zum Löschen beziehungsweise Beladen eines am Kai anliegenden Schiffs mit Containern. In den Terminals kann daher auch ein entsprechend kombinierter Verkehr zwischen Wasser, Straße und/oder Schiene stattfinden.

Zu Transportfahrzeugen im Sinne der vorliegenden Anmeldung zählen damit insbesondere Spezialfahrzeuge, die als interne Transportfahrzeuge nur innerbetrieblich innerhalb solcher Betriebsbereiche oder Terminals betrieben werden und in der Regel nicht für einen externen Einsatz im öffentlichen Verkehr vorgesehen und ausgelegt beziehungsweise zugelassen sind. Diese Transportfahrzeuge sind daher strikt vom öffentlichen Verkehr getrennt zu betreiben. Als ein möglicher Fahrzeugtyp solcher Transportfahrzeuge werden beispielsweise spezielle Containertransportfahrzeuge eingesetzt, die eine von zueinander beabstandeten Führungselementen begrenzte Ladefläche aufweisen und vorzugsweise symmetrisch aufgebaut sind, so dass sie gleichartig vorwärts und rückwärts fahren können. Die Führungselemente werden auch als Einweiser bezeichnet und führen einen aufzunehmenden Container beziehungsweise dessen Eckbeschläge auf die Ladefläche. Hierfür erstrecken sich die Führungselemente mit ihren Führungsflächen schräg nach außen und oben von der Ladefläche weg. Die Ladefläche kann hierbei auch als Teil einer heb- und senkbaren Hubplattform ausgebildet sein. Derartige Containertransportfahrzeuge sind beispielsweise aus der EP 2 637 954 B1 bekannt.

Auch eine als Terminal Truck oder Terminal Tractor bezeichnete Zugmaschine kann für sich genommenen oder zusammen mit einem oder mehreren Anhängern als eine Art Sattelzug einen Fahrzeugtyp von internen Transportfahrzeugen im Sinne der vorliegenden Anmeldung bilden. Deren Ladefläche für die Aufnahme der Ladungsträger ist dann nicht wie bei den vorgenannten speziellen Containertransportfahrzeugen an der Zugmaschine selbst, sondern jeweils an dem oder den Anhängern vorgesehen und kann ebenfalls wie oben beschrieben von Führungselementen begrenzt sein. Derartige Transportfahrzeuge sind beispielsweise aus DE 10 2012 108 768 A1 bekannt.

Auch Portalhubgeräte stellen einen Fahrzeugtyp von internen Transportfahrzeugen im Sinne der vorliegenden Anmeldung dar. Diese Transportfahrzeuge sind beispielsweise in der EP 2 694 424 B1 beschrieben. Derartige Portalhubgeräte, die auch Portalhubstapelwagen, Portalstapelwagen, Straddle Carrier, Van Carrier, Shuttle Carrier oder Runner genannt werden, werden nicht nur als Transportfahrzeug für einen Containertransport im Horizontalverkehr, sondern insbesondere auch als spezielle Umschlaggeräte für ISO-Container eingesetzt. Mit Hilfe einer Hubvorrichtung und einem als Spreader bezeichneten Lastaufnahmemittel können Portalhubgeräte Container anheben und nach einem Transport an einem Zielort abstellen. Da die Portalhubgeräte einen spinnenbeinartigen Aufbau aufweisen, können diese einen auf dem Boden oder auf einem anderen Container ruhenden Container überfahren und hierbei zusätzlich je nach Bauweise auch einen angehobenen Container transportieren. Je nach Bauhöhe werden die Portalhubgeräte beispielsweise als 1 über 3-Geräte, 1 über 2-Geräte usw. bezeichnet. Ein 1 über 3-Gerät kann einen Container auf 3 gestapelte Container absetzen, den obersten von 4 gestapelten Containern aufnehmen oder 3 gestapelte Container mit einem aufgenommenen Container überfahren.

Die vorgenannten internen Transportfahrzeuge können manuell geführt werden und dementsprechend insbesondere beim Beschleunigen, Bremsen und Lenken von üblicherweise mitfahrenden Fahrern aktiv manuell gesteuert werden. Hierfür weisen manuell geführte Transportfahrzeuge eine entsprechende Fahrzeugsteuerung und üblicherweise auch eine Fahrerkabine auf, aus der zum manuellen Führen ein manuelles Eingreifen in die Fahrzeugsteuerung erfolgen kann. Alternativ können die internen Transportfahrzeuge auch automatisch geführt sein und dementsprechend insbesondere beim Beschleunigen, Bremsen und Lenken im Sinne so genannter Automated Guided Vehicles (AGV) automatisiert gesteuert werden und dies sowohl beim Vorwärts- als auch beim Rückwärtsfahren. Hierfür weisen automatisch geführte Transportfahrzeuge eine geeignete Fahrzeugsteuerung auf, so dass aufgrund der hierüber erfolgenden automatischen Steuerung beziehungsweise Navigation kein aktives manuelles Eingreifen eines mitfahrenden Fahrers erforderlich oder möglich ist. **In** diesem Sinne kann ein automatisch geführtes Transportfahrzeug auch bemannt sein, wenn ein Fahrer mitfährt, hierbei jedoch nicht im Sinne eines Fahrzeugführers aktiv in die Steuerung des Transportfahrzeugs eingreifen muss oder kann. Fahrerlose, aber von einem Fahrzeugführer manuell ferngesteuerte Transportfahrzeuge gelten im Sinne dieser Anmeldung nicht als automatisch geführte, sondern als manuell geführte Fahrzeuge.

Ebenfalls bekannt sind konventionelle Lkw, insbesondere Sattelzüge, die für den Transport von Containern im öffentlichen Verkehr zugelassen sind und eingesetzt werden. Derartige auch als Road Trucks bezeichnete Fahrzeuge stellen ebenfalls einen Fahrzeugtyp manuell geführter Transportfahrzeuge im Sinne der vorliegenden Anmeldung dar. Diese Transportfahrzeuge werden nachfolgend als externe manuell geführte Transportfahrzeuge bezeichnet, da sie auch außerhalb entsprechender Terminals im öffentlichen Verkehr eingesetzt werden können und in der Regel zu einem überwiegenden Anteil im öffentlichen Verkehr eingesetzt werden.

Die deutsche Offenlegungsschrift DE 10 2005 049 159 A1 betrifft führerlose Transportfahrzeuge, die als Teil von führerlosen Transportsystemen insbesondere in Produktionsanlagen eingesetzt werden. Zur Umgebungsauswertung und Kollisionsvermeidung wird ein als Sensor zur Objekterkennung dienender Laserscanner eingesetzt, der Abstandsinformationen zu einem Objekt, welches auch eine Person sein kann, erfasst und in Abhängigkeit von einer Bremscharakteristik und Geschwindigkeit des Transportfahrzeugs einen erlaubten Mindestabstand ermittelt. Dringt das erfasste Objekt in den definierten Mindestabstand ein, so wird ein Bremsvorgang oder ein Ausweichmanöver von der Auswerteeinheit veranlasst.

Ein Transportfahrzeug für Container gemäß dem Oberbegriff von Anspruch 1 und ein Verfahren zum Betreiben eines solchen Transportfahrzeugs sind bereits aus der DE 10 2017 103 097 A1 bekannt.

Der Erfindung liegt die Aufgabe zugrunde, ein entsprechendes automatisch geführtes Transportfahrzeug für Container sowie ein Verfahren zum Betreiben desselben bereit zu stellen, bei denen die Betriebssicherheit noch weiter erhöht ist.

Diese Aufgabe wird durch ein Transportfahrzeug mit den Merkmalen des Anspruchs 1 und ein Verfahren mit den Merkmalen des Anspruchs 10 gelöst. In den abhängigen Ansprüchen und der nachfolgenden Beschreibung sind vorteilhafte Ausgestaltungen der Erfindung angegeben.

Erfindungsgemäß wird ein Transportfahrzeug für Container, das automatisch führbar ist und hierfür eine Fahrzeugsteuerung aufweist, mittels derer eine Geschwindigkeit sowie eine Fahrtrichtung des Transportfahrzeugs steuerbar ist, wobei das Transportfahrzeug zumindest ein erstes Sensorsystem zur Objekterkennung aufweist, das mit der Fahrzeugsteuerung und insbesondere mit von der Fahrzeugsteuerung ansteuerbaren Aktuatoren wie beispielsweise Bremsen derart zusammenwirkt, dass in Abhängigkeit von Signalen des ersten Sensorsystems eine Geschwindigkeit und/oder Fahrtrichtung des Transportfahrzeugs automatisch veränderbar ist, dadurch verbessert, dass das Transportfahrzeug zusätzlich zur Fahrzeugsteuerung ein Kollisionsvermeidungssteuerungssystem aufweist, das eingerichtet ist, um in Abhängigkeit von Informationen über zumindest ein erkanntes Objekt und eine Betriebssituation des Transportfahrzeugs, also situationsabhängig, zu entscheiden, ob zur Kollisionsvermeidung eine Veränderung der Geschwindigkeit und/oder Fahrtrichtung des Transportfahrzeugs zu veranlassen ist, wobei vorzugsweise die Informationen zumindest teilweise vom Kollisionsvermeidungssteuerungssystem und zumindest die Informationen über das erkannte Objekt aus Signalen des ersten Sensorsystems gewonnen werden.

Dabei kann insbesondere im oder am Transportfahrzeug eine Auswerteeinheit vorgesehen sein, beispielsweise als Teil des Kollisionsvermeidungssteuerungssystems, die zunächst die Sensorsignale hinsichtlich des jeweiligen erkannten Objekts auswertet, um entsprechende Informationen zu gewinnen, und dann zur Entscheidungsfindung die Informationen über das jeweilige erkannte Objekt und/oder über die jeweilige Betriebssituation auswertet.

Aus den Sensorsignalen, das heißt aus den Signalen zumindest des ersten Sensorsystems, werden als Informationen über das jeweils erkannte Objekt insbesondere Informationen hinsichtlich der Position des Objekts (bspw. relativ zum Transportfahrzeug) und/oder dessen Orientierung und/oder dessen Geschwindigkeitsvektor und/oder dessen Größe und/oder Zeit (z.B. Zeitpunkt der Objekterkennung) gewonnen.

Die vorliegend gemeinten Informationen über eine Betriebssituation können beispielsweise Informationen über örtliche Gegebenheiten des Betriebsbereichs des Transportfahrzeugs sein, insbesondere die Anzahl und Anordnung vorhandener Fahrspuren, Kreuzungen und Verkehrsregeln wie Abbiegeverbote und -gebote, Vorfahrtsregeln, Einfahrverbote, Einbahn- bzw. Einrichtungsverkehr. Die Informationen über eine Betriebssituation können alternativ oder zusätzlich auch Informationen über Positionen (z.B. je Transportfahrzeug ermittelbar und bereitstellbar über ein geeignetes Ortungssystem) des Transportfahrzeugs relativ zu den örtlichen Gegebenheiten und/oder Fahrsituationen des Transportfahrzeugs darin enthalten, insbesondere aktuelle und beabsichtigte Fahrmanöver (z.B. Geradeausfahrt oder Kurvenfahrt zum Abbiegen in eine quer verlaufende Fahrspur oder Spurwechsel auf eine parallele Fahrspur). Die entsprechenden Informationen über die örtlichen Gegebenheiten des Betriebsbereichs können in einer Speichereinheit des Transportfahrzeugs, insbesondere in Form oder als Teil einer gespeicherten Karte beispielsweise im Sinne einer Straßenkarte, gespeichert sein und damit dem Kollisionsvermeidungssteuerungssystem bereitgestellt werden. Die Informationen über die Fahrsituationen, insbesondere Fahrmanöver, können von der Fahrzeugsteuerung bereitgestellt werden. Hierfür sind signalübertragende Verbindungen zwischen dem Kollisionsvermeidungssteuerungssystem und den die entsprechenden Informationen bereitstellenden Komponenten, insbesondere der Speichereinheit und/oder der Fahrzeugsteuerung und/oder dem Ortungssystem, vorgesehen.

Die in die Entscheidungsfindung des Kollisionsvermeidungssteuerungssystems einfließende Betriebssituation kann also beispielsweise durch Informationen über ein beabsichtigtes, d.h. von der aktuellen Position ausgehendes und nachfolgend durchgeführtes, Fahrmanöver repräsentiert werden, beispielsweise in Form eines entsprechenden Bewegungspfades des Transportfahrzeugs, insbesondere durch Position(en) und/oder Geschwindigkeit(en) und/oder Fahrtrichtung(en) und/oder Lenkwinkel(n) des Transportfahrzeugs, jeweils zu verschiedenen Zeitpunkten.

Insbesondere die Bereitstellung und Berücksichtigung von die jeweiligen Betriebssituationen repräsentierenden Informationen ist vorteilhaft, da beispielsweise bei gleichem Objekt und Abstand des Objekts zum Transportfahrzeugs nicht immer eine kritische Betriebssituation vorliegt, in der das Objekt ein Hindernis für das Transportfahrzeug darstellt, was einen Eingriff wie eine Veränderung der Geschwindigkeit und/oder Fahrtrichtung erfordert, um eine Kollision zu vermeiden. Wenn sich beispielsweise aus Position, Orientierung und Geschwindigkeitsvektor des erkannten Objekts ergibt, dass sich das Objekt vom Transportfahrzeug, insbesondere unter Berücksichtigung von dessen Fahrsituation, entfernt, ist keine Reaktion in Form einer Veränderung der Geschwindigkeit und/oder Fahrtrichtung erforderlich, da keine Kollision droht.

Ausgehend von einer aktuellen Betriebssituation, insbesondere Fahrsituation, kann damit in Bezug auf ein geplantes oder beabsichtigtes nachfolgendes Fahrmanöver vorab eine Auswertung der Sensorsignale erfolgen und in die daraus gewonnen Informationen über erkannte Objekte in die situationsabhängige Entscheidungsfindung einfließen.

Auf Basis einer Auswertung, insbesondere eines Vergleichs, der vorliegenden Informationen kann dann situationsabhängig entschieden werden, ob zur Kollisionsvermeidung eine Veränderung der Geschwindigkeit und/oder Fahrtrichtung des Transportfahrzeugs zu veranlassen ist. Falls ja, wird diese Veränderung von dem Kollisionsvermeidungssteuerungssystem veranlasst, beispielsweise durch eine Vorgabe an die Fahrzeugsteuerung, welche die Vorgabe dann in eine entsprechend veränderte Geschwindigkeit und/oder Fahrtrichtung umsetzt.

Sofern eine solche Vorgabe dann erfolgt, kann diese beispielsweise eine Reduzierung der Geschwindigkeit bis hin zum Stillstand und/oder ausgehend von der bisherigen Fahrtrichtung ein Ausweichmanöver in Bezug auf ein erkanntes Objekt bewirken.

In diesem Zusammenhang kann von dem Kollisionsvermeidungssteuerungssystem als Veränderung der Geschwindigkeit nicht nur die maximal zulässige Geschwindigkeit vorgegeben und insbesondere angepasst werden, sondern auch überwacht werden, ob die Vorgabe eines solchen Geschwindigkeitslimits eingehalten wird. Entsprechendes gilt im Falle einer kollisionsvermeidend veränderten Fahrtrichtung, die von dem Kollisionsvermeidungssteuerungssystem im Sinne eines kollisionsvermeidenden Ausweichmanövers vorgegeben werden kann und deren Einhalten dann ebenfalls überwacht wird. Falls die jeweilige Vorgabe nicht, insbesondere nicht innerhalb einer vordefinierten Zeitspanne, eingehalten wird, kann ein Bremsvorgang bzw. ein entsprechender Steuerbefehl von dem Kollisionsvermeidungssteuerungssystem ausgelöst werden. Zu diesem Zweck kann das Kollisionsvermeidungssteuerungssystem zweistufig aufgebaut sein, indem es eine erste Steuerungseinheit für die jeweilige Vorgabe und eine zweite Steuerungseinheit, vorzugsweise in Form einer auch als fail-safe Steuerung bezeichneten zertifizierten Sicherheitssteuerung, zur Überwachung des Einhaltens der jeweiligen Vorgabe umfasst.

Insbesondere für die nachfolgend genannten Beispiele kann das Transportfahrzeug, vorzugsweise dessen Kollisionsvermeidungssteuerungssystem, so eingerichtet sein, dass eine Veränderung der Geschwindigkeit und/oder Fahrtrichtung des Transportfahrzeugs in Abhängigkeit davon veranlasst wird, ob das erkannte Objekt innerhalb oder außerhalb eines Untersuchungsbereichs befindet, wobei der Untersuchungsbereich ein vordefinierter Teilbereich eines Detektionsbereichs zumindest des ersten Sensorsystems ist. Vorzugsweise ist das mindestens eine Sensorsystem, vorzugsweise auch das optionale zweite Sensorsystem, so eingerichtet, dass sich der jeweilige Detektionsbereich vollständig um das Transportfahrzeug herum erstreckt, wobei dann jeder Sensor und damit jedes Sensorsystem aktiv sein und Objekte erkennen kann, jedoch in Abhängigkeit der Position des Objekts relativ zum Untersuchungsbereich entschieden werden kann, ob eine Veränderung der Geschwindigkeit und/oder Fahrtrichtung des Transportfahrzeugs zu veranlassen ist.

Wenn mehrere Sensoren zur Objekterkennung vorgesehen sind, ist der Untersuchungsbereich vorzugsweise ein vordefinierter Teilbereich eines gemeinsamen Detektionsbereichs von zumindest zwei der Sensoren. Vorzugsweise sind ein erstes und ein zweites Sensorsystem einbezogen und damit zumindest einer der mehreren Sensoren vom ersten Sensorsystem und einer der mehreren Sensoren vom zweiten Sensorsystem. Die Sensoren können aber auch Teil eines einzigen Sensorsystems sein. Das erste Sensorsystem und das zweite Sensorsystem können auch jeweils mindestens zwei Sensoren zur Objekterkennung umfassen.

Insbesondere kann vorgesehen sein, dass der Untersuchungsbereich situationsabhängig, das heißt insbesondere abhängig von der jeweiligen Betriebssituation des Transportfahrzeugs, angepasst wird, wobei der Untersuchungsbereich vorzugsweise beschränkt wird auf den für ein bevorstehendes Fahrmanöver benötigten Raum, insbesondere unter Berücksichtigung der Trajektorie des Transportfahrzeugs während des aktuellen und/oder geplanten Fahrmanövers und der hierbei zumindest teilweise belegten Fahrspur(en). Dabei kann vorgesehen sein, dass sich der Untersuchungsbereich insbesondere bei einer Geradeausfahrt nur in Fahrtrichtung vor dem Transportfahrzeug und insbesondere innerhalb der aktuell genutzten und/oder zu überquerenden Fahrspur (beidseitig rechts und links der aktuellen Fahrspur oder bei einer T-Kreuzung einseitig der aktuellen Fahrspur) erstreckt, und bei einer Kurvenfahrt nur in Fahrtrichtung und Kurvenrichtung vor und neben dem Transportfahrzeug erstreckt, insbesondere innerhalb der aktuell genutzten und/oder zukünftigen Fahrspur.

In Folge der situationsabhängigen Anpassung des Untersuchungsbereichs erfolgt auch eine etwaige Veränderung der Geschwindigkeit und/oder Fahrtrichtung situationsabhängig. Die situationsabhängigen Anpassungen des Untersuchungsbereichs können damit zumindest teilweise auch ortsabhängig sein, wenn beispielsweise bei zwei physikalisch identisch ausgestalteten Kreuzungen unterschiedliche Vorfahrtsregeln vorgesehen sind.

Die Anpassung des Untersuchungsbereichs kann beispielsweise seine Größe und/oder Ausrichtung und/oder Geometrie umfassen und insbesondere in Abhängigkeit der aktuellen Position und/oder Geschwindigkeit des Transportfahrzeugs erfolgen. Hierfür können in einer Speichereinheit des Transportfahrzeugs, insbesondere Kollisionsvermeidungssystems, auch verschiedene Untersuchungsbereiche vordefiniert und hinterlegt werden, so dass die situationsabhängige Anpassung des Untersuchungsbereichs als Auswählen eines vordefinierten Untersuchungsbereichs erfolgen kann.

Der Untersuchungsbereich erstreckt sich gemäß einer Ausführungsform in Fahrtrichtung gesehen zumindest über die Fahrzeugbreite außerhalb des Transportfahrzeugs und vor dem Transportfahrzeug. Dies kann sowohl für eine Geradeausfahrt als auch für eine Kurvenfahrt zum Abbiegen oder Spurwechsel gelten. Bei einer Geradeausfahrt kann sich der Untersuchungsbereich auch ausschließlich vor dem Transportfahrzeug erstrecken. Für eine Kurvenfahrt wird der Untersuchungsbereich an der in Kurvenrichtung zeigenden Längsseite des Transportfahrzeugs erweitert und erstreckt sich dort seitlich und außerhalb des Transportfahrzeugs, vorzugsweise unter Berücksichtigung der Trajektorie des Transportfahrzeugs während der nachfolgend beabsichtigten Kurvenfahrt.

Zudem kann vorgesehen sein, dass sich der Untersuchungsbereich nicht über eine einzelne oder mehrere Fahrspuren hinaus erstreckt, weil diese darüber hinaus gehenden Bereiche nicht befahren werden und somit dort befindliche Objekte zur Kollisionsvermeidung ignoriert werden können, insbesondere stationäre Objekte.

Auch für das Queren einer Kreuzung in Geradeausfahrt kann der Untersuchungsbereich in Richtung jeder querenden Fahrspur erweitert werden.

Im Falle eines als Sattelzug ausgebildeten Transportfahrzeugs können vom Kollisionsvermeidungssteuerungssystem, insbesondere bei der Definition des Untersuchungsbereichs, auch ein vorzugsweise kontaktlos ermittelter Knickwinkel zwischen Zugmaschine und Anhänger (z.B. durch sensorbasierte Erkennung der Kontur des Anhängers und Berechnung von dessen Orientierung relativ zur Zugmaschine sowie darauf basierender Ermittlung des Knickwinkels) sowie andere geometrische Informationen über das Transportfahrzeug (z.B. Fahrt einer Zugmaschine ohne Anhänger oder mit Anhänger als Leerfahrt oder mit aufgenommenem Container) berücksichtigt werden. Auch etwaige Restriktionen für die Fahrtroutenplanung und/oder einzelne Transportaufträge können unter Berücksichtigung solcher Informationen berechnet werden. Zudem kann das Transportfahrzeug eingerichtet sein, um ein automatisches Ankoppeln und Abkoppeln des Anhängers an die Zugmaschine durchzuführen und entsprechende Informationen an das Kollisionsvermeidungssteuerungssystem zu senden, damit diese beispielsweise als Teil der Betriebssituation bei der Entscheidung über eine etwaige Veränderung der Geschwindigkeit und/oder Fahrtrichtung des Transportfahrzeugs berücksichtigt werden können.

Die möglichen Untersuchungsbereiche können insbesondere auch so definiert sein, dass die an das Transportfahrzeug angrenzenden Bereiche, die in Bezug auf die Fahrtrichtung und/oder Kurvenrichtung entgegengesetzt oder abgewandt sind, immer außerhalb des Untersuchungsbereichs liegen und somit dort erkannte Objekte ignoriert werden können.

Darüber hinaus kann gemäß einer Ausführungsform vorgesehen sein, dass eine Veränderung der Geschwindigkeit und/oder Fahrtrichtung des Transportfahrzeugs erst oder nur dann veranlasst wird, wenn sich ein erkanntes Objekt innerhalb des Untersuchungsbereichs befindet, wobei dies auch als notwendige, aber nicht hinreichende Bedingung zu verstehen sein kann, wenn die Betriebssituation als unkritisch bewertet wird, insbesondere weil das erkannte Objekt kein Hindernis für die Fahrsituation des Transportfahrzeugs und dessen aktuelles oder beabsichtigtes Fahrmanöver darstellt. Mit anderen Worten kann durch den Untersuchungsbereich also festgelegt werden, ob von dem mindestens einen Sensorsystem erkannte Objekte überhaupt in einem als relevant eingestuften Teil des Detektionsbereichs, nämlich dem Untersuchungsbereich, liegen und unter Berücksichtigung dessen zur Kollisionsvermeidung überhaupt eine Veränderung der Geschwindigkeit und/oder Fahrtrichtung erfordern oder nicht.

Auf diese Weise kann beispielsweise bei einer vorwärts gerichteten Geradeausfahrt oder Kurvenfahrt des Transportfahrzeugs ein rückwärtig des Transportfahrzeugs erkanntes Objekt von dem Kollisionsvermeidungssteuerungssystem als außerhalb des Untersuchungsbereichs liegend und damit unkritisch eingestuft werden, womit keine Veränderung der Geschwindigkeit oder Fahrtrichtung erforderlich ist. Auch wenn sich das erkannte Objekt an einer von der gefahrenen Kurvenrichtung abgewandten Längsseite außerhalb des Untersuchungsbereichs befindet, kann dies dadurch als unkritisch eingestuft werden und somit die Kurvenfahrt ohne Eingriff durch das Kollisionsvermeidungssteuerungssystem fortgesetzt werden. Wenn sich in einem anderen Beispiel der Untersuchungsbereich bei einer vorwärts gerichteten Geradeausfahrt ausschließlich vor dem Transportfahrzeug erstreckt und ein Objekt, beispielsweise ein weiteres Fahrzeug auf einer Nebenspur erkannt wird, erfolgt ebenfalls keine Veränderung der Geschwindigkeit und auch keine Veränderung der Fahrtrichtung, weil sich das erkannte Objekt außerhalb des Untersuchungsbereichs befindet und diese Situation dadurch als unkritisch bewertet wird. Eine vergleichbare Situation ist nicht nur beim Nebeneinanderfahren oder Überholen auf nebeneinander liegenden Fahrspuren denkbar, sondern auch beim Vorbeifahren an einem stationären Objekt, bspw. einem abgestellten Container, oder auf einer Übergabespur unter einem Portalkran. Die obigen Beispiele veranschaulichen, wie ein unnötiges Abbremsen verhindert werden kann, wenn ein Objekt zwar erkannt wird, sich also innerhalb des Detektionsbereichs befindet, hierbei aber nicht im Untersuchungsbereich.

Wenn sich ein Objekt jedoch während einer Kurvenfahrt, beispielsweise einer vorwärts gefahrenen Rechtskurve, an einer der gefahrenen Kurvenrichtung zugewandten Längsseite, beispielsweise an der rechten Längsseite, befindet, kann hingegen zur Kollisionsvermeidung eine Verlangsamung bis hin zu einem Stillstand und/oder eine geänderte Fahrtrichtung (z.B. durch Vorgabe eines anderen Lenkwinkels bzw. Kurvenradius an die Fahrzeugsteuerung) veranlasst werden, weil das Objekt sich auch in dem Teil des Untersuchungsbereichs befindet, der sich an der in Kurvenrichtung zeigenden Längsseite neben dem Transportfahrzeug erstreckt.

Auch können von dem Kollisionsvermeidungssteuerungssystem Bewegungsrichtungen und theoretisch mögliche Bewegungsbereiche der erkannten Objekte berücksichtigt werden, so dass ein sich von dem Transportfahrzeug wegbewegendes Objekt ebenfalls als unkritisch, insbesondere als unkritische Betriebssituation, eingestuft werden kann, beispielsweise auch dann, wenn es innerhalb des Untersuchungsbereichs liegt.

Gemäß einer alternativen Ausführungsform kann vorgesehen sein, dass eine Veränderung der Geschwindigkeit und/oder Fahrtrichtung des Transportfahrzeugs veranlasst wird, wenn sich ein erkanntes Objekt zwischen dem Transportfahrzeug und dem Untersuchungsbereich befindet, insbesondere in einem als weiterer Teilbereich des Detektionsbereich definierten Freie-Sicht-Bereich.

**In** einer weiteren Ausführungsform kann vorgesehen sein, dass in einer Speichereinheit des Transportfahrzeugs, insbesondere des Kollisionsvermeidungssteuerungssystems, eine Karte eines vordefinierten, vorzugsweise abgegrenzten, Betriebsbereichs für das Transportfahrzeug gespeichert ist, welche beispielsweise im Sinne einer Straßenkarte insbesondere die örtlichen Gegebenheiten enthält oder repräsentiert, beispielsweise wie die Anzahl und Anordnung vorhandener Verkehrswege und darin vorgesehener Fahrspuren, Kreuzungen, insbesondere deren Mittelpunkte, und Verkehrsregeln wie Abbiegeverbote und -gebote, Vorfahrtsregeln, Einfahrverbote, Einbahn- bzw. Einrichtungsverkehr. Dabei ist das Kollisionsvermeidungssteuerungssystem dann eingerichtet, um in Abhängigkeit einer aktuellen oder nachfolgend beabsichtigten Position des Transportfahrzeugs relativ zu der Karte und/oder in Abhängigkeit eines aktuellen oder nachfolgend beabsichtigten Fahrmanövers und/oder in Abhängigkeit der am Ort des Fahrmanövers geltenden Verkehrsregeln den Untersuchungsbereich anzupassen, um situationsabhängig, insbesondere ortsabhängig und/oder unter Berücksichtigung der bekannten und in der Speichereinheit hinterlegten örtlichen Gegebenheiten, die Sensorsignale auswerten und situationsabhängig entscheiden zu können, ob zur Kollisionsvermeidung eine Veränderung der Geschwindigkeit und/oder Fahrtrichtung des Transportfahrzeugs zu veranlassen ist.

Die dem Kollisionsvermeidungssteuerungssystem insbesondere hierfür bereitgestellten Informationen über die aktuelle Position des Transportfahrzeugs können beispielsweise über ein geeignetes Ortungssystem ermittelt werden, das zumindest teilweise vom Transportfahrzeug mitgeführt werden kann.

Des Weiteren kann vorgesehen sein, dass beim Annähern des Transportfahrzeugs an eine querende und in Geradeausfahrt zu überquerende Fahrspur einer Kreuzung der Untersuchungsbereich insbesondere von dem Kollisionsvermeidungssteuerungssystem so angepasst wird, dass er sich nicht nur in Fahrtrichtung gesehen über die Fahrzeugbreite vor dem Transportfahrzeug, sondern auch darüber hinaus in die querende und/oder zu überquerende Fahrspur hinein erstreckt, insbesondere einseitig oder beidseitig ausgehend von der aktuellen Fahrspur. Damit einhergehend kann dann insbesondere von dem Kollisionsvermeidungssteuerungssystem der Freie-Sicht-Bereich zwischen dem Transportfahrzeug und dem sich in die querende Fahrspur hinein erstreckenden Untersuchungsbereich, insbesondere zu beiden Seiten rechts und links der aktuellen Fahrspur, definiert und dahingehend überwacht werden, ob in dem Freie-Sicht-Bereich von zumindest einem Sensor ein Objekt erkannt wird. Falls ein Objekt im Freie-Sicht-Bereich erkannt wird, wird dies von dem Kollisionsvermeidungssteuerungssystem dahingehend interpretiert, dass die Sensorsicht auf den sich in die querende und zu überquerende Fahrspur hinein erstreckenden Untersuchungsbereich beeinträchtigt ist. Daraufhin wird eine Verringerung der Geschwindigkeit des Transportfahrzeugs veranlasst, obwohl das erkannte Objekt außerhalb des Untersuchungsbereichs liegt.

Der Freie-Sicht-Bereich kann sich dabei dreieckförmig erstrecken, insbesondere jeweils zur rechten und/oder linken Seite ausgehend von der aktuellen Fahrspur. Auch kann vorgesehen sein, dass der Freie-Sicht-Bereich kleiner wird, je näher das Transportfahrzeug der querenden Fahrspur bzw. der Kreuzung kommt. Sobald für den jeweiligen Sensor freie Sicht im gesamten Untersuchungsbereich und damit auch in die querende Fahrspur hinein herrscht, kann wieder wie oben beschrieben auf Basis der Sensorsignale und der Betriebssituation bzw. der entsprechenden Informationen entschieden werden, ob die Geschwindigkeit und/oder Fahrtrichtung des Transportfahrzeugs verändert und gegebenenfalls die Geschwindigkeit wieder erhöht werden kann, je nachdem ob sich ein möglicherweise erkanntes Objekt innerhalb des Untersuchungsbereichs befindet oder nicht. Dadurch kann eine solche Kreuzung beispielsweise ohne vorheriges Abbremsen in Geradeausfahrt passiert werden, wenn kein Objekt im Freie-Sicht-Bereich erkannt wird, für das Sensorsystem also freie Sicht in die querende und zu überquerende Fahrspur vorliegt, und zudem im dortigen Untersuchungsbereich kein Objekt erkannt wird. Dies ist auch möglich, wenn ein etwaiges im Untersuchungsbereich erkanntes Objekt in der vorliegenden Betriebssituation oder aufgrund seiner Bewegungsrichtung und/oder Geschwindigkeit als unkritisch eingestuft wird. Umgekehrt erhöht die Überwachung eines solchen Freie-Sicht-Bereichs die Sicherheit, da eine Annäherung der Kreuzung mit verringerter Geschwindigkeit immer dann sichergestellt ist, wenn im Freie-Sicht-Bereich ein Objekt erkannt wird, da in solchen Situationen keine freie Sensorsicht vorliegt und somit eine vollständige und verlässliche Einbeziehung des Untersuchungsbereichs in die Entscheidungsfindung des Kollisionsvermeidungssteuerungssystems nicht möglich ist.

Optional kann im Sinne einer Redundanz vorgesehen sein, dass mehrere Sensoren zur Objekterkennung vorgesehen sind und das Kollisionsvermeidungssteuerungssystem, insbesondere dessen jeweilige Steuerungseinheit und/oder Auswerteeinheit, eingerichtet ist, um zu prüfen, ob zumindest zwei der Sensoren und/oder zwei etwaige einbezogene Sensorsysteme dasselbe Objekt detektieren, insbesondere innerhalb einer vordefinierten Toleranz hinsichtlich der Position und/oder dessen Orientierung und/oder dessen Geschwindigkeitsvektor und/oder dessen Größe und/oder Zeit. Es wird also ein Vergleich der Signale von zumindest zwei Sensoren durchgeführt. Durch einen solchen Signalvergleich lassen sich beispielsweise Fehlerkennungen und unnötige Reduzierungen der Geschwindigkeit vermeiden.

Ein Vorteil besteht somit darin, dass die redundanten Sensoren in Verbindung mit dem fahrzeugeigenen Kollisionsvermeidungssteuerungssystem einen auch als Crosscheck bezeichneten Signalvergleich durchführen, um Objekte besonders zuverlässig zu erkennen sowie diesbezügliche Informationen zu bestimmen, auszuwerten und dann auf Basis des Crosschecks bzw. Vergleichsergebnisses und unter weiterer Berücksichtigung der Betriebssituation ggf. durch entsprechendes Veranlassen einer Veränderung der Geschwindigkeit und/oder Fahrtrichtung für einen kollisionsfreien Betrieb zu nutzen.

Vorzugsweise sind mindestens zwei Sensoren so angeordnet, dass freie Sensorsicht entlang zumindest einer Seite (Vorderseite, Rückseite oder Längsseite) des Transportfahrzeugs gegeben ist, damit in diesem Bereich ein gemeinsamer, d.h. überlappender, Detektionsbereich der Sensoren gegeben ist, um den Crosscheck zu ermöglichen. Entsprechendes gilt für den Crosscheck zwischen zwei Sensorsystemen.

Eine Veränderung der Geschwindigkeit, insbesondere ein Abbremsen, und/oder der Fahrtrichtung wird insbesondere dann veranlasst, wenn unter Berücksichtigung der genannten Toleranz nur einer der in den Signalvergleich einbezogenen Sensoren oder nur eins von mehreren in den Signalvergleich einbezogenen Sensorsystemen ein Objekt detektiert. Wenn die in den Signalvergleich einbezogenen Sensoren oder Sensorsysteme hingegen dasselbe Objekt detektieren, kann wieder wie oben beschrieben auf Basis der Signale der einbezogenen Sensoren und der Betriebssituation entschieden werden, ob die Geschwindigkeit und/oder Fahrtrichtung des Transportfahrzeugs verändert und gegebenenfalls die Geschwindigkeit wieder erhöht werden kann, vorzugsweise je nachdem ob sich ein möglicherweise erkanntes Objekt innerhalb des Untersuchungsbereichs befindet oder nicht.

Optional kann hierbei das Kollisionsvermeidungssteuerungssystem für jedes Sensorsystem und dessen jeweilige(n) Sensor(en) eine eigene Steuerungseinheit, insbesondere mit einer Auswerteeinheit, aufweisen, um den Signalvergleich durchzuführen. Dementsprechend kann für das erste Sensorsystem und für das zweite Sensorsystem jeweils eine Steuerungseinheit vorgesehen sein. Jeder Sensor des ersten Sensorsystems ist hierfür signalübertragend mit der ersten und zweiten Steuerungseinheit verbunden und jeder Sensor des zweiten Sensorsystems ebenfalls mit der ersten und zweiten Steuerungseinheit. Auch ein Signalvergleich zwischen den jeweiligen Steuereinheiten kann hierbei vorgesehen sein. Durch die Redundanz von Sensoren und/oder Sensorsystemen und/oder Steuerungseinheiten und entsprechende Crosschecks bzw. Gegenprüfungen beim Vergleich der Signale von den jeweiligen Sensoren lassen sich die Zuverlässigkeit und Sicherheit bei der Objekterkennung und Kollisionsvermeidung erhöhen.

Die jeweiligen Steuerungseinheiten des Kollisionsvermeidungssteuerungssystems können separat vorgesehen oder auch Teil einer übergeordneten gemeinsamen Steuerung sein, die wiederum Teil der Fahrzeugsteuerung bzw. in diese integriert sein kann. Zudem kann die jeweilige Steuerungseinheit des Kollisionsvermeidungssteuerungssystem auch eine zertifizierte Sicherheitssteuerung sein.

Mögliche Typen von Sensoren, insbesondere 3D-Sensoren, bei den Ausführungsbeispielen dieser Anmeldung sind beispielsweise Lasersensoren, Lidarsensoren, Kameras, insbesondere nach dem Laufzeitverfahren arbeitende Kameras (time-of-flight-Kameras), Radarsensoren, Ultraschallsensoren. Anstelle der beispielhaft genannten optischen Sensoren, können auch andere optische Sensoren verwendet werden.

Auch kann vorgesehen sein, dass mindestens ein zweites Sensorsystem zur Objekterkennung vorgesehen ist, vorbei vorzugsweise jeder Sensor des ersten Sensorsystems von einem ersten Typ ist und jeder Sensor des zweiten Sensorsystems von einem zweiten Typ ist, der von dem ersten Typ verschieden ist. Dementsprechend könnte beispielsweise jeder Sensor des ersten Sensorsystems ein optischer Sensor, beispielsweise Lasersensor oder Lidarsensor, und jeder Sensor des zweiten Sensorsystems ein Radarsensor sein. Mit anderen Worten weist jeder Sensor des ersten Sensorsystems dann dieselbe Funktionsweise auf. Jeder Sensor des zweiten Sensorsystems weist ebenfalls dieselbe Funktionsweise auf, die jedoch von derjenigen des ersten Sensorsystems verschieden ist. Auch ein drittes Sensorsystem, bei dem jeder Sensor von einem dritten Typ ist, beispielsweise ein Ultraschallsensor, kann vorgesehen sein, insbesondere zur Objekterkennung im Nahbereich.

Das erfindungsgemäße Transportfahrzeug kann zudem beispielsweise als Terminal Truck mit oder ohne Anhänger, Containertransportfahrzeug oder Portalhubgerät im Sinne der jeweiligen Definition dieser Anmeldung ausgebildet sein. Denkbar ist auch eine Einbindung des Kollisionsvermeidungssteuerungssystems und/oder der Fahrzeugsteuerung und/oder weiterer Steuerungsmodule für den Automatikbetrieb in ein übergeordnetes Leitsystem für die Transportfahrzeuge in einer Anlage zum Umschlag von Containern, wie beispielsweise einem Umschlagterminal. Mehrere erfindungsgemäße Transportfahrzeuge können dann vorteilhaft gemeinsam in und als Teil einer Anlage oder eines Systems zum Umschlag von Containern, beispielsweise einem anhand der Figuren beschriebenen Terminal, eingesetzt und automatisch betrieben werden.

Gemäß einem weiteren Aspekt der vorliegenden Anmeldung wird für ein Verfahren zum Betreiben eines erfindungsgemäßen Transportfahrzeugs, vorgeschlagen, dass von einem zusätzlich zur Fahrzeugsteuerung vorgesehenen Kollisionsvermeidungssteuerungssystem des Transportfahrzeugs in Abhängigkeit von Informationen über ein erkanntes Objekt und eine Betriebssituation des Transportfahrzeugs entschieden wird, ob zur Kollisionsvermeidung eine Veränderung der Geschwindigkeit und/oder Fahrtrichtung des Transportfahrzeugs zu veranlassen ist, wobei vorzugsweise die Informationen zumindest teilweise vom Kollisionsvermeidungssteuerungssystem und zumindest die Informationen über das erkannte Objekt aus Signalen des ersten Sensorsystems gewonnen werden.

Gemäß einer möglichen Ausgestaltung des Verfahrens kennt das Transportfahrzeug seine Position und Orientierung innerhalb seines Betriebsbereichs und insbesondere einer entsprechenden Karte im obigen Sinne, die in einer Speichereinheit des Transportfahrzeugs gespeichert sein kann. Darüber kann dem Kollisionsvermeidungssteuerungssystem die entsprechende Information bereitgestellt werden, insbesondere auch auf welcher Fahrspur das Transportfahrzeug fährt. Aus den Sensordaten kann ermittelt werden und ist somit bekannt, in welcher relativen Entfernung zum Transportfahrzeug und/oder auf welcher Fahrspur das erkannte Objekt sich befindet und/oder wohin und mit welcher Geschwindigkeit es sich bewegt und/oder welche Verkehrsregeln zwischen dem Transportfahrzeug und dem erkannten Objekt gültig sind. Außerdem kennt die Fahrzeugsteuerung das beabsichtige bevorstehende Fahrmanöver und stellt dem Kollisionsvermeidungssteuerungssystem entsprechende Informationen bzw. Signale bereit. In Abhängigkeit der Signale bzw. Informationen kann das Kollisionsvermeidungssteuerungssystem die erfindungsgemäße Entscheidung treffen und hierzu auch zuvor den optionalen Untersuchungsbereich definieren, wozu mit den Informationen insbesondere Fallunterscheidungen vorgenommen werden können und beispielsweise berücksichtigt werden kann, ob das Transportfahrzeug geradeaus fährt und dabei gleichbleibend dieselbe Fahrspur benutzt, ob sich das Transportfahrzeug einer Kreuzung mit zumindest einer querenden Fahrspur nähert, ob eine Kurvenfahrt des Transportfahrzeugs bevorsteht, insbesondere zum Wechsel auf eine parallele Fahrspur für eine anschließend fortgesetzte Geradeausfahrt parallel zur bisherigen Fahrtrichtung oder zum Abbiegen in eine querende Fahrspur, ggf. mit vorherigem Überqueren einer Fahrspur mit Gegenverkehr.

Je nach dem auf welcher Fahrspur sich ein erkanntes Objekt befindet, ob es sich nähert oder entfernt, insbesondere mit welcher Geschwindigkeit, und in Abhängigkeit der vordefinierten Vorfahrtsregeln an einer Kreuzung kann vom Kollisionsvermeidungssteuerungssystem erfindungsgemäß entschieden werden, ob zur Kollisionsvermeidung eine Veränderung der Geschwindigkeit und/oder Fahrtrichtung des Transportfahrzeugs zu veranlassen ist.

Die in Bezug auf das erfindungsgemäße Transportfahrzeug beschriebenen Vorteile gelten im Übrigen entsprechend, weshalb zur Vermeidung von Wiederholungen auf die Ausführungen zu den Aspekten des erfindungsgemäßen Transportfahrzeugs verwiesen wird.

Ein Ausführungsbeispiel der Erfindung wird anhand der nachfolgenden Beschreibung näher erläutert. Es zeigen:
Figur 1 eine schematische Seitenansicht eines erfindungsgemäßen automatisch geführten Transportfahrzeugs, beispielhaft in Form eines Sattelzugs,
Figur 1a eine schematische Seitenansicht eines alternativen erfindungsgemäßen automatisch geführten Transportfahrzeugs, beispielhaft in Form eines symmetrischen Containertransportfahrzeugs;
Figur 2 eine schematische Ansicht eines Terminals zum Umschlag von Containern,
Figur 2a eine schematische Ansicht eines alternativen Terminals zum Umschlag von Containern,
Figur 3 eine schematische Ansicht von Steuerungskomponenten eines erfindungsgemäßen Transportfahrzeugs;
Figuren 4a bis 4d schematische Ansichten alternativer Ausführungsformen des erfindungsgemäßen Transportfahrzeugs und
Figuren 5a und 5b schematische Ansichten auf verschiedene Betriebssituationen von erfindungsgemäßen Transportfahrzeugen.

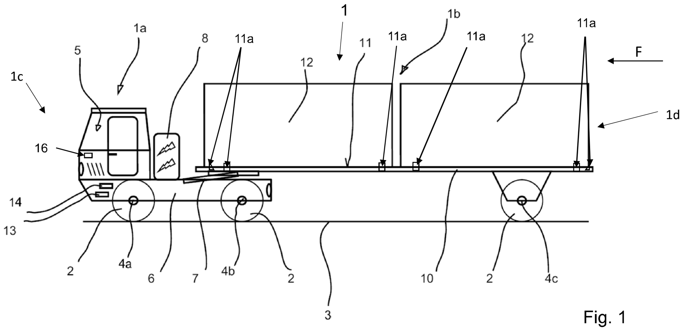

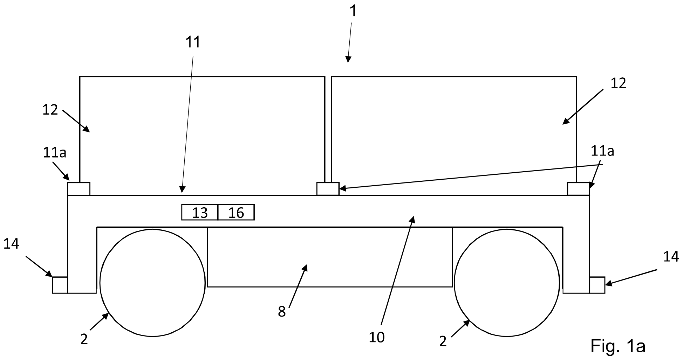

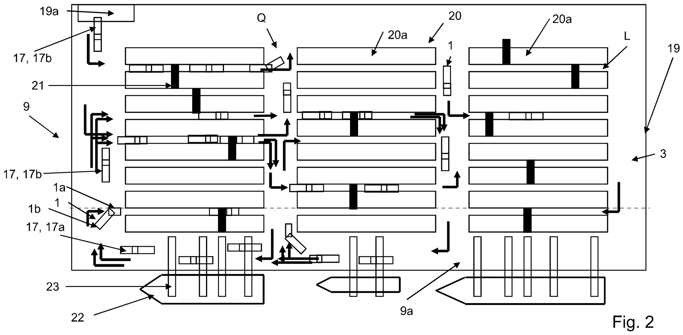

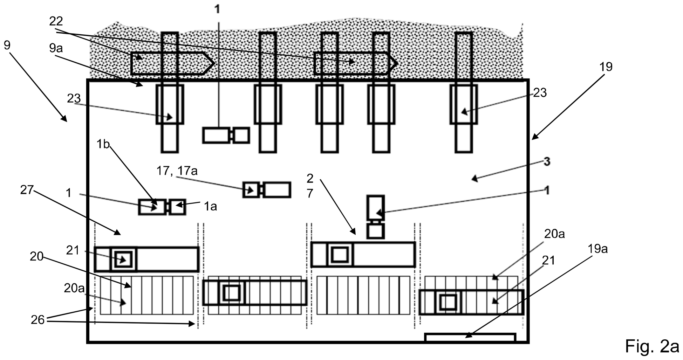

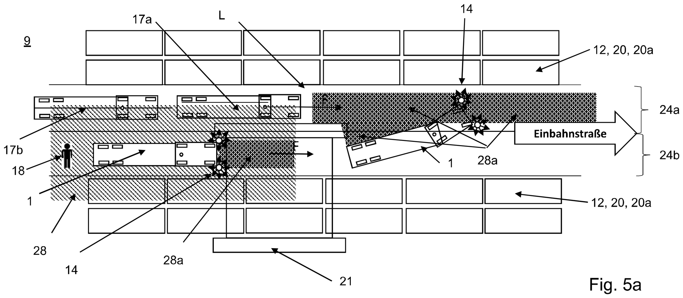

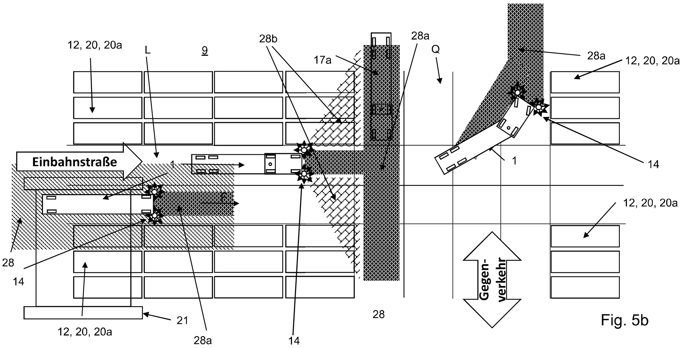

Die Figur 1 zeigt eine schematische Seitenansicht eines erfindungsgemäßen automatisch geführten Transportfahrzeugs 1 für Container 12, das in einem Terminal 9 (siehe beispielsweise Figuren 2, 2a, 5a und 5b) zum Umschlag von Containern 12 eingesetzt wird. Das Transportfahrzeug 1 ist beispielhaft als Sattelzug ausgebildet und umfasst dementsprechend eine auch als Terminal Truck bezeichnete Zugmaschine 1a sowie einen daran angekoppelten Anhänger in Form eines Aufliegers 1b. Derartige Sattelzüge weisen in der Schwerlastausführung ein Gesamtzuggewicht von bis zu 200 t auf. Auch die Zugmaschine 1a für sich genommen und ohne Auflieger 1b stellt ein Transportfahrzeug 1 dar.

Das Transportfahrzeug 1 ist über Räder 2 frei auf einer Flurfläche 3 und damit flurgebunden, jedoch nicht schienengebunden verfahrbar. Dementsprechend ist das Transportfahrzeug 1 von Schienenfahrzeugen zu unterscheiden. Die Räder 2 sind jeweils mit einer Bereifung versehen, die vorzugsweise eine mit Luft befüllte Gummibereifung im Sinne von Pneus ist. Außerdem umfasst das Transportfahrzeug 1 einen Fahrantrieb mit mindestens einem als Elektromotor ausgebildeten Motor und einem Getriebe, um hierüber die Räder 2 anzutreiben. Der Motor und das Getriebe sind zur besseren Übersichtlichkeit nicht dargestellt. Grundsätzlich ist anstelle eines Elektromotors auch ein Verbrennungsmotor denkbar. Die Räder 2 sind in üblicher Weise an zwei Achsen 4a, 4b im Bereich der Zugmaschine 1a angeordnet. Wenn das Transportfahrzeug 1 als Sattelzug ausgebildet ist, sind auch an zumindest einer weiteren dritten Achse 4c an dem Auflieger 1b Räder 2 angeordnet. Grundsätzlich ist es auch möglich, andere Achszahlen und Achsanordnungen mit entsprechender Anzahl von Rädern 2 vorzusehen, wenn dies technisch erforderlich ist.

Das Transportfahrzeug 1 beziehungsweise dessen Zugmaschine 1a umfasst ein Fahrgestell 6, an dem die Räder 2 über die vordere erste Achse 4a und die hintere zweite Achse 4b gelagert sind. Zudem ist im hinteren Bereich des Fahrgestells 6 eine Sattelplatte 7 angeordnet, die Bestandteil einer Sattelkupplung ist. Die Sattelplatte 7 kann über einen hydraulischen Antrieb heb- und senkbar ausgebildet sein, so dass die Zugmaschine 1a den Auflieger 1b aktiv und selbstständig an- beziehungsweise abkuppeln kann. Der hydraulische Hub der Sattelplatte 7 ermöglicht es, Sattellasten bis 45 t anzuheben. Auch ein andersartiges An- und Abkuppeln des Aufliegers 1b ohne hydraulische Hubmöglichkeit ist denkbar, beispielsweise durch einen manuelle betätigbaren Kupplungsmechanismus. Die Sattelplatte 7 kann auch derart gelenkartig ausgebildet sein, dass kein regelmäßiges Trennen von Zugmaschine 1a und Auflieger 1b vorgesehen ist und somit Zugmaschine 1a und Auflieger 1b dauerhaft zu einer festen Einheit in Form eines Sattelzugs verbindet. Außerdem trägt das Fahrgestell 6 eine Batterie 8, die den oder die Elektromotoren des Fahrantriebs des Transportfahrzeugs 1 speist und mit diesem mitbewegt wird. Die Batterie 8 ist als wiederaufladbare Batterie ausgebildet und oberhalb des Fahrgestells 6 oder unterhalb desselben beispielsweise zwischen den beiden Achsen 4a, 4b angeordnet, um einen einfachen Austausch mit einer geladenen Batterie 8 zu ermöglichen. Alternativ kann auch an dem Auflieger 1b eine zusätzliche Batterie 8 zur Speisung des Fahrantriebs angeordnet und hierfür mit dem Fahrantrieb elektrisch verbunden sein.

Der Auflieger 1b weist keine am der Zugmaschine 1a zugewandten Ende angeordnete vordere Achse, sondern nur eine oder mehrere hintere Achsen 4c auf, die am von der Zugmaschine 1a abgewandten Ende unter einem Rahmen 10 des Aufliegers 1b gelagert sind. Eine Art vordere Achse des Aufliegers 1b wird jedoch durch die hintere Achse 4b der Zugmaschine 1a gebildet. Auch weist der Auflieger 1b nicht dargestellte und an seinem der Zugmaschine 1a zugewandten vorderen Ende angeordnete Stützen auf. Die Stützen sind zum Abstellen des Auflegers 1b nach erfolgtem Abkuppeln und je nach Ausgestaltung der Sattelplatte 7 zum Auf- und Absatteln eines Aufliegers 1b an der Zugmaschine 1a vorgesehen. Außerdem weist der Auflieger 1b keinen eigenen Antrieb auf.

Des Weiteren weist das Transportfahrzeug 1 beziehungsweise dessen Auflieger 1b auf seinem Rahmen 10 eine im Wesentlichen ebene Ladefläche 11 für Container 12 auf. In der Figur 1 sind in Fahrtrichtung F einer Vorwärtsfahrt des Transportfahrzeugs 1 gesehen hintereinander zwei als ISO-Container ausgebildete Container 12 mit einer Länge von etwa 20 Fuß abgestellt. ISO-Container im oben definierten Sinne haben genormte Eckbeschläge. Die Eckbeschläge können beispielsweise von dem als so genannter Spreaderrahmen ausgebildeten Lastaufnahmemittel eines Krans ergriffen werden um den ISO-Container von der Ladefläche 11 anzuheben oder auf dieser abzustellen.

Um einen zu transportierenden Container 12 und im Fall von ISO-Containern insbesondere dessen Eckbeschläge beim Absetzen auf der Ladefläche 11 führen und in Bezug auf die Ladefläche 11 ausrichten zu können, wird die Ladefläche 11 an ihren Seiten von mehreren Führungselementen 11a begrenzt. Die Führungselemente 11a weisen hierfür Führungsflächen mit einem schrägen Verlauf auf. Hierbei erstrecken sich die Führungsflächen von der Ladefläche 11 nach oben und außen weg gerichtet und zu der Ladefläche 11 nach unten und innen hin gerichtet. Vorzugsweise sind die Führungselemente 11a paarweise an gegenüberliegenden Seiten, insbesondere Längsseiten und/oder Schmalseiten, der Ladefläche 11 angeordnet. Die Führungsflächen eines Paars von Führungselementen 11a bilden eine Art Trichter, deren schräger Verlauf sich zur Ladefläche 11 hin verjüngt, um die Führungs- und Ausrichtfunktion zu realisieren. Dementsprechend erweitern sich die Führungsflächen eines Paars von Führungselementen 11a von der Ladefläche 11 nach oben weggerichtet.

Das Transportfahrzeug 1 ist im oben definierten Sinne automatisch geführt und weist hierfür eine in Figur 1 schematisch dargestellte Fahrzeugsteuerung 13 sowie ein erstes Sensorsystem 14 zur Objekterkennung und ein Kollisionsvermeidungssteuerungssystem 16 auf, die zusammenwirken, wie an anderer Stelle dieser Anmeldung näher beschrieben wird. Mittels der Fahrzeugsteuerung 13 sind die Fahrmanöver des Transportfahrzeugs 1 automatisch steuerbar, indem beispielsweise über ein Leitsystem geplante Transportaufträge ausgeführt und diesbezüglich vorgegebene Fahrtrouten steuerungstechnisch in entsprechende Fahrmanöver innerhalb unten näher beschriebener Terminals 9 zum Umschlag von Containern 12 umgesetzt werden. In diesem Zusammenhang werden mittels der Fahrzeugsteuerung 13 Lenkvorgänge und (zulässige/tatsächliche) Geschwindigkeiten sowie Beschleunigungen des Transportfahrzeugs 1 automatisch gesteuert. Des Weiteren kann das Transportfahrzeug 1 optional von einem Fahrer auch im oben definierten Sinne manuell innerhalb des entsprechenden Terminals 9 geführt beziehungsweise gesteuert werden, so dass auch ein Wechsel zwischen manueller und automatischer Führung des Transportfahrzeugs 1 denkbar ist. Für die manuelle Variante ist im vorderen Bereich der Zugmaschine 1a eine Fahrerkabine 5 mit entsprechenden Steuerungsmitteln für einen manuellen Eingriff in die Fahrzeugsteuerung 13 angeordnet. Bei ausschließlich automatisch geführten Transportfahrzeugen 1 kann die Fahrerkabine 5 wie in Figur 1 dargestellt fahrerlos bleiben oder auch weggelassen werden.

Die Figur 2 zeigt eine schematische Ansicht eines Terminals 9 zum Umschlag von Containern 12 in der Draufsicht. Das Terminal 9 ist beispielhaft als Hafenterminal ausgebildet. Hierbei können an einem Kai 9a eines Hafens mehrere Schiffe 22 anlegen, um Container 12 anzuliefern oder abzuholen. Für das Beladen beziehungsweise Löschen der Schiffe 22 sind an dem Kai 9a Containerbrücken 23 vorgesehen, die auch als Ship-to-Shore Krane (kurz: STS-Kran) bezeichnet werden und deren Ausleger sich einerseits über die Schiffe 22 und andererseits über den Kai 9a erstrecken. Alternativ kann das Beladen beziehungsweise Löschen der Schiffe 22 auch über so genannte Hafenkrane erfolgen, deren Ausleger hierbei um eine vertikale Achse über das entsprechende Schiff 22 verschwenkt wird.

Das Terminal 9 ist in üblicher Weise von einer beispielsweise als Zaun oder Mauer ausgebildeten Begrenzung 19 umgeben und hierüber von seiner äußeren Umgebung und vom öffentlichen Verkehr außerhalb des Terminals 9 getrennt. Zudem umfasst das Terminal 9 innerhalb der Begrenzung 19 ein Containerlager 20, in dem Container 12 zur kurzzeitigen Zwischenlagerung in mindestens einem auch als Stack bezeichneten Lagerbereich 20a gestapelt werden können. Dies kann der Fall sein, nachdem die Container 12 von den Schiffen 22 abgeladen wurden und bevor sie für den weiteren Transport außerhalb des Terminals 9 auf ein Straßen- oder Schienenfahrzeug geladen oder nachdem sie hiervon angeliefert wurden und bevor sie auf die Schiffe 22 geladen werden.

Üblicher Weise sind in einem derartigen Terminal 9 mehrere Lagerbereiche 20a vorgesehen, die jeweils reihenförmig beziehungsweise rasterartig nebeneinander und voneinander beabstandet angeordnet sind. In jedem Lagerbereich 20a können mehrere, beispielsweise zehn, Reihen von Containern mit ihren Längsseiten nebeneinander und je Reihe mehrere, beispielsweise sechs Container 12, übereinander abgestellt werden. Zum Bewirtschaften des Containerlagers 20 beziehungsweise der jeweiligen Lagerbereiche 20a, das heißt zum dortigen Ein- und Auslagern von Containern 12, ist mindestens ein als Portalkran 21 ausgebildeter Stapelkran vorgesehen. Die Umschlaggeräte darstellenden Portalkrane 21 überspannen mit ihren von Portalstützen getragenen Kranträgern den entsprechenden Lagerbereich 20a und die darin gestapelten Container 12. Für das Ein- und Auslagern von Containern 12 können die Portalkrane 21 über den Lagerbereich 20a in dessen Längsrichtung hinweg verfahren.

Innerhalb des Terminals 9 erfolgt zum Transport von Containern 12 ein gemeinsamer und gleichzeitiger Betrieb von mindestens einem automatisch geführten Transportfahrzeug 1, das im Sinne der obigen Definition ein internes Fahrzeug ist, und mindestens einem manuell geführten Transportfahrzeug, das ebenfalls ein internes Fahrzeug in Form eines internen manuell geführten Transportfahrzeugs 17a oder im Sinne der obigen Definition ein externes Fahrzeug in Form eines externen manuell geführten Transportfahrzeugs 17b wie beispielsweise ein für den öffentlichen Straßenverkehr zugelassener konventioneller Lkw oder Sattelzug sein kann. Interne manuell geführte Transportfahrzeuge 17a entsprechen der manuellen Variante des in Figur 1 beschriebenen Transportfahrzeugs 1 mit Fahrerkabine 5. In dem Terminal 9 ist also ein Mischverkehr automatisch geführter Transportfahrzeuge 1 und manuell geführter Transportfahrzeuge 17a, 17b möglich. Mittels der internen Fahrzeuge erfolgt ein Transport der Container 12 zwischen dem Containerlager 20 beziehungsweise dessen Umschlaggeräten und den am Kai 9a angeordneten Umschlaggeräten in Form der Containerbrücken 23 oder Hafenkrane, mit denen die Container 12 zwischen den Transportfahrzeugen 1 beziehungsweise 17a und den Schiffen 22 umgeschlagen und dementsprechend die Transportfahrzeuge 1 und 17a am Kai 9a be- und entladen werden können. Mittels der externen manuell geführten Fahrzeuge 17b können Container vom Containerlager 20 beziehungsweise dessen Umschlaggerät für den weiteren Transport im öffentlichen Verkehr abgeholt oder nach einem Transport im öffentlichen Verkehr zur Zwischenlagerung im Containerlager 20 angeliefert werden. Diese Transporte erfolgen jeweils in einem so genannten Horizontalverkehr.

Die den Lagerbereichen 20a als Umschlaggeräte zugeordneten Portalkrane 21 sind in Figur 2 als so genannte gummibereifte Stapelkrane (Rubber-Tyred Gantry Crane - kurz: RTG) oder schienengebundene Stapelkrane (Rail-Mounted Gantry Crane - kurz: RMG) ausgebildet, die entweder von einer in einer Krankabine mitfahrenden Bedienperson manuell geführt beziehungsweise gesteuert werden oder (teil-)automatisiert geführt beziehungsweise gesteuert werden. Dementsprechend wird das in Figur 2 schematisch dargestellte Terminal 9 auch als RMG- beziehungsweise RTG-Terminal bezeichnet. Bei diesem Terminaltyp sind zwischen den sich parallel zum Rand des verlaufenden Kais 9a erstreckenden Lagerbereichen 20a geradlinige und rasterförmig angeordnete Gassen vorgesehenen, in denen die internen Transportfahrzeuge 1 und die internen oder externen Transportfahrzeuge 17a, 17b im Rahmen des Mischverkehrs auf gemeinsamen und/oder jeweils zugewiesenen Fahrspuren verkehren (siehe die übrigen Figuren). Das Beladen und Entladen der Transportfahrzeuge 1 und 17a, 17b durch die Portalkrane 21 erfolgt in den entlang der Längsseiten führenden Längsgassen L der Lagerbereiche 20a (siehe auch Figuren 5a und 5b). Dort sind als Übergabespuren dienende Fahrspuren für die Transportfahrzeuge 1 und 17a, 17b vorgesehen, die von dem jeweiligen Portalkran 21 ebenfalls überspannt werden. Über quer und insbesondere senkrecht zum Kai 9a verlaufende Quergassen Q beziehungsweise deren Fahrspuren können die Transportfahrzeuge 1 und 17a, 17b die Längsgassen L anfahren. Auch kann vorgesehen sein, dass die Portalkrane 21 mehrere in Längsrichtung benachbarte Lagerbereiche 20a, die durch eine Quergasse Q voneinander beabstandet sind, bewirtschaften und hierfür eine oder mehrere Quergassen Q überfahren. Alternativ kann jedem Lagerbereich 20a mindestens ein Portalkran 21 zugeordnet sein. Der Bereich des Kais 9a mit den dortigen Umschlaggeräten ist jedoch den internen Fahrzeugen 1 und 17a vorbehalten, weshalb entsprechende Barrieren oder Passierbereiche mit Sicherheitsschleusen innerhalb des Terminals 9 vorgesehen sein können (gestrichelte Linie in Figur 2). Dadurch erfolgt innerhalb des Terminals 9 im Bereich des Kais 9a ebenfalls zumindest ein Mischverkehr zwischen automatisch geführten Transportfahrzeugen 1 und manuell geführten Transportfahrzeugen 17a.

In Figur 2a ist ein alternatives Terminal 9 dargestellt, das als so genanntes ASC-Terminal ausgebildet ist. Anders als bei dem in Figur 2 dargestellten Terminal 9 sind die Portalkrane 21 hier als so genannte automatisierte Stapelkrane (Automated Stacking Crane - kurz: ASC) ausgebildet. Bei diesem Terminaltyp sind zwischen den Lagerbereichen 20a üblicherweise keine Gassen für die Transportfahrzeuge 1 und 17a, 17b vorgesehen, sondern lediglich für Schienenbahnen 26, auf denen die ASCs verfahren und zwischen deren paarweiser Anordnung jeweils ein Lagerbereich 20a angeordnet ist. Anders als bei RMG- beziehungsweise RTG-Terminals erstrecken sich die Lagerbereiche 20a auch nicht entlang und insbesondere parallel, sondern quer und insbesondere senkrecht zum Kai 20a. Auch die Portalkrane 21 verfahren dementsprechend üblicherweise quer zum Kai 9a. Des Weiteren weist das Containerlager 20 eines ASC-Terminals keine an den Längsseiten der Lagerbereiche 20a angeordneten Übergabespuren auf. Stattdessen sind an den in Längsrichtung weisenden Längsenden des jeweiligen Lagerbereichs 20a kopfseitige Übergabebereiche 27 vorgesehen. In Figur 2a sind nur die kaiseitigen, jedoch keine landseitigen Übergabebereiche 27 und auch keine externen Transportfahrzeuge 17b dargestellt. Durch die vorbeschriebene Ausgestaltung des Containerlagers 20 eines ASC-Terminals wird der bezüglich des Containerlagers 20 wasserseitige beziehungsweise kaiseitige Verkehr interner Fahrzeuge 1 und 17a durch das Containerlager 20 von landseitigem Verkehr externer Fahrzeuge 17b getrennt. Am wasserseitigen Mischverkehr zwischen automatisch geführten Transportfahrzeugen 1 und manuell geführten Transportfahrzeugen 17a sind dementsprechend nur interne Fahrzeuge beteiligt. Im bezüglich des Containerlagers 20 landseitigen Bereich können auch interne manuell geführte Transportfahrzeuge 17a im Mischverkehr mit externen manuell geführten Transportfahrzeugen 17b eingesetzt werden, um beispielsweise eine Anbindung eines Bahnterminals sicherzustellen.

Die Begrenzung 19 des jeweiligen Terminals 9 weist mindestens einen Passierbereich 19a für die externen manuell geführten Transportfahrzeuge 17b auf, so dass diese vom öffentlichen Verkehr außerhalb des Terminals 9 kommend nur durch den Passierbereich in das Terminal 9 hinein beziehungsweise von dort zurück in den öffentlichen Verkehr hinaus fahren können. Zum gezielten beziehungsweise kontrollierten Öffnen und Schließen jedes Passierbereichs 19a kann auch jeweils eine Sicherheitsschleuse zum An- und Abmelden einschließlich einer Identifikation der ein- und ausfahrenden externen Fahrzeuge und deren Fahrer vorgesehen sein. Die internen Fahrzeuge 1, 17a dürfen nicht durch den Passierbereich 19a fahren, da sie nicht in den öffentlichen Verkehr außerhalb des Terminals 9 gelangen dürfen und auch nur innerhalb des Terminals 9 bestimmungsgemäß betrieben werden können. Hiervon ausgenommen ist ein Verlassen des landseitigen Bereichs beziehungsweise des Terminals 9 beispielsweise für Wartungs- oder Reparaturzwecke, was nicht als bestimmungsgemäßer Betrieb gilt.

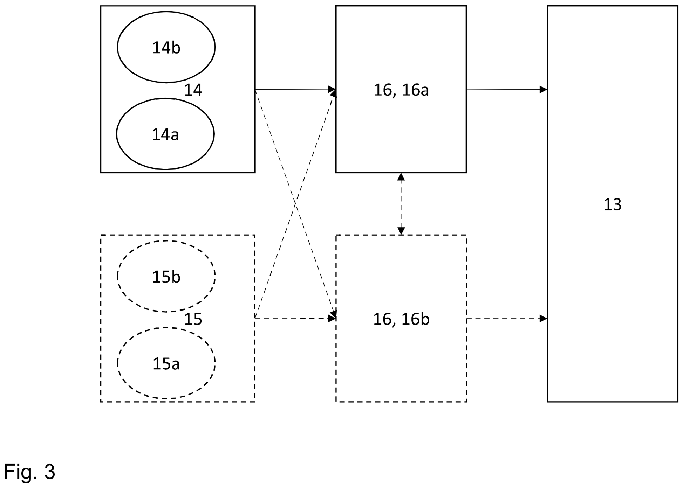

Die Figur 3 zeigt eine schematische Ansicht von Steuerungskomponenten des Transportfahrzeugs 1 aus Figur 1. Dargestellt ist das erste Sensorsystem 14, das exemplarisch erste und zweite Sensoren 14a, 14b aufweist, deren Signale von dem Kollisionsvermeidungssteuerungssystem 16, insbesondere dessen Steuerungseinheit 16a, ausgewertet werden, um Informationen über ein erkanntes Objekt zu gewinnen, damit in Abhängigkeit von diesen Informationen entschieden werden kann, ob zur Kollisionsvermeidung eine Veränderung der zulässigen und/oder tatsächlichen Geschwindigkeit und/ oder Fahrtrichtung des Transportfahrzeugs 1 zu veranlassen ist. Hierfür ist das Kollisionsvermeidungssteuerungssystem 16 signalübertragend mit der Fahrzeugsteuerung 13 verbunden oder optional als integraler Bestandteil der Fahrzeugsteuerung 13 ausgestaltet, damit gegebenenfalls von dem Kollisionsvermeidungssteuerungssystem 16 eine Vorgabe an die Fahrzeugsteuerung 13 erfolgen kann, welche die Vorgabe dann in eine entsprechend veränderte Geschwindigkeit und/oder Fahrtrichtung umsetzt.

Durch gestrichelte Linien ist zudem dargestellt, dass optional mindestens ein zweites Sensorsystem 15, exemplarisch zwei Sensoren 15a, 15b umfassend, vorgesehen sein kann. Das zweite Sensorsystem 15 kann analog zum ersten Sensorsystem 14 signalübertragend mit dem Kollisionsvermeidungssteuerungssystem 16 und darüber auch mit der Fahrzeugsteuerung 13 verbunden oder in die Fahrzeugsteuerung 13 integriert sein. Das Kollisionsvermeidungssteuerungssystem 16 kann für das zweite Sensorsystem 15 auch eine von der ersten Steuerungseinheit 16a verschiedene zweite Steuerungseinheit 16b aufweisen. Ebenso kann für einen Vergleich (Crosscheck) der Sensorsignale des ersten Sensorsystems 14 mit den Sensorsignalen des zweiten Sensorsystems 15 eine signalübertragende Verbindung zwischen den Steuereinheiten 16a 16b vorgesehen sein, um anhand des Vergleichs zu prüfen, ob zumindest zwei der Sensoren 14a, 14b, 15a, 15b dasselbe Objekt detektieren, insbesondere innerhalb einer vordefinierten Toleranz hinsichtlich der Position dessen Orientierung und/oder dessen Geschwindigkeitsvektor und/oder Größe und/oder Zeit. Darüber hinaus kann dann für einen solchen Crosscheck der Sensorsignale eine signalübertragende Verbindung zwischen dem ersten Sensorsystem 14 und der zweiten Steuerungseinheit 16b sowie zwischen dem zweiten Sensorsystem 15 und der ersten Steuerungseinheit 16a vorgesehen sein. Zusätzlich zu dem zweiten Sensorsystem 15 können auch ein oder mehrere weitere Sensorsysteme zur Objekterkennung vorgesehen und auf gleiche Weise in das Kollisionsvermeidungssteuerungssystem 16 und/oder die Fahrzeugsteuerung 13 eingebunden sein.

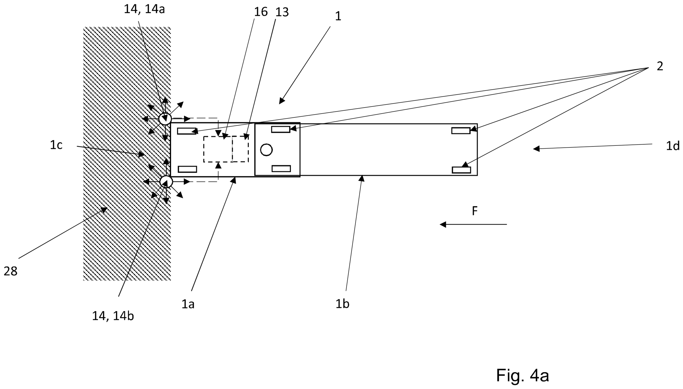

Die Figuren 4a bis 4d zeigen schematische Ansichten alternativer Ausführungsformen des erfindungsgemäßen Transportfahrzeugs 1. Das Transportfahrzeug 1 in Figur 4a ist exemplarisch mit einem ersten Sensorsystem 14 zur Objekterkennung dargestellt, das ebenso exemplarisch zwei Sensoren 14a bzw. 14b aufweist, die an einer Vorderseite 1c, insbesondere an einer rechten bzw. linken vorderen Ecke, des Transportfahrzeugs 1 angebracht sind. Denkbar wäre im Sinne einer Mindestkonfiguration des Transportfahrzeugs 1 auch, dass das erste Sensorsystem 14 nur einen Sensor 14a aufweist, der dann beispielsweise mittig an der Vorderseite 1c angebracht sein könnte.

Die Sensoren 14a bzw. 14b und auch alle weiteren im Zusammenhang der vorliegenden Erfindung genannten Sensoren, insbesondere die Sensoren 14c, 14d, 15a, 15b, 15c, 15d, können so ausgebildet sein, dass sie jeweils eine Objekterkennung mit einem Blickwinkel oder Erfassungswinkel von mindestens 120 Grad, vorzugsweise bis zu 360 Grad um sich selbst herum, und bis zu einer Entfernung von mehreren Metern (Sensor-Reichweite) ermöglichen, sofern eine freie Sensorsicht gegeben ist.

An der Vorderseite 1c ergibt sich somit ein schematisch dargestellter überlappender Detektionsbereich 28, den beide Sensoren 14a und 14b abdecken. Der überlappende Detektionsbereich 28 wird begrenzt durch Beeinträchtigungen der Sensorsicht zumindest eines der beiden Sensoren 14a und 14b, beispielsweise durch die außerhalb der Sensoren liegende Außenkontur des Transportfahrzeugs 1, sowie die jeweilige Sensor-Reichweite. Der dargestellte überlappende Detektionsbereich 28 betrifft nur optionale Ausführungsformen der Erfindung; im Sinne einer Mindestkonfiguration eines erfindungsgemäßen Transportfahrzeugs 1 genügt es, wenn das Sensorsystem 14 nur einen Sensor 14a aufweist, womit dann auch kein überlappender Detektionsbereich 28 vorliegen kann. Auch bei mehreren Sensoren muss kein überlappender Detektionsbereich 28 vorliegen.

Durch signalübertragende Einbindung in das Kollisionsvermeidungssteuerungssystem 16 und die Fahrzeugsteuerung 13 können aus den Sensorsignalen Informationen über ein etwaiges Objekt im Detektionsbereich 28 gewonnen werden und unter Berücksichtigung dieser Informationen entschieden werden, ob eine Veränderung der zulässigen und/oder tatsächlichen Geschwindigkeit und/oder Fahrtrichtung des Transportfahrzeugs 1 zu veranlassen ist.

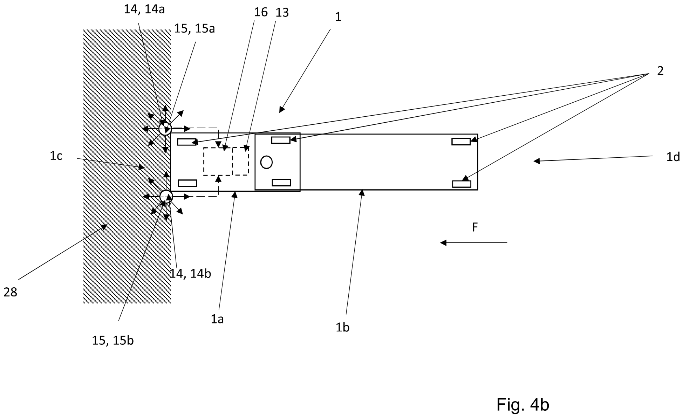

Das in Figur 4b dargestellte Transportfahrzeug 1 unterscheidet sich von demjenigen aus Figur 4a dadurch, dass zusätzlich zu dem ersten Sensorsystem 14 ein zweites Sensorsystem 15, exemplarisch ebenfalls mit zwei Sensoren 15a und 15b, vorgesehen und signalübertragend mit dem Kollisionsvermeidungssteuerungssystem 16 und der Fahrzeugsteuerung 13 verbunden ist. Hierbei ist vorzugsweise das zweite Sensorsystem 15 so angeordnet, dass sich die Detektionsbereiche 28 beider Sensorsysteme 14 und 15 möglichst überlappen. Diese Ausführungsform ermöglicht einen Crosscheck der Sensorsignale des ersten Sensorsystems 14 mit den Sensorsignalen des zweiten Sensorsystems 15 im oben beschriebenen Sinne. Optional können die Sensorsysteme 14 und 15 wie im Zusammenhang von Figur 3 dargestellt jeweils über eine eigene Steuerungseinheit 16a bzw. 16b in das Kollisionsvermeidungssteuerungssystem 16 eingebunden sein.

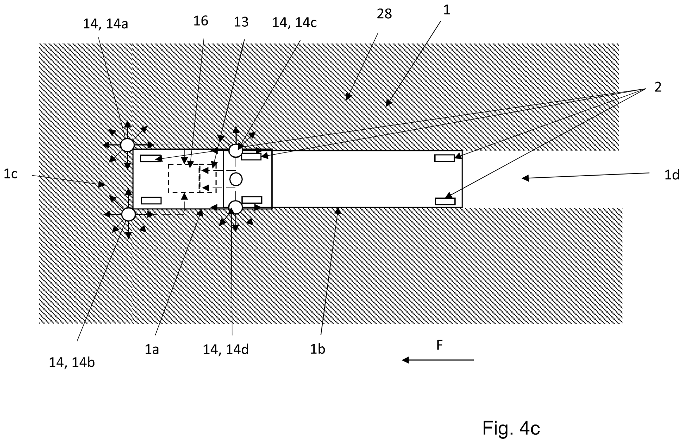

In Figur 4c ist das erste Sensorsystem 14 gegenüber demjenigen aus Figur 4a um einen dritten Sensor 14c und einen vierten Sensor 14d erweitert. Der dritte Sensor 14c ist an der rechten Längsseite des Transportfahrzeugs 1 angeordnet und der vierte Sensor 14d an der linken Längsseite des Transportfahrzeugs 1, beispielhaft jeweils an der Zugmaschine 1a. Dadurch ist auch der überlappende Detektionsbereich 28 von der Vorderseite 1c auf die rechte und linke Längsseite des Transportfahrzeugs 1 erweitert, wobei die Überlappung bzw. Abdeckung auf der rechten Längsseite von den Sensoren 14a und 14c und auf der linken Längsseite von den Sensoren 14b und 14d erzielt wird. Nur die Rückseite 1d ist hier von keinem Sensor abgedeckt und damit auch von keinem Detektionsbereich 28 der Sensoren 14 bis 14d umfasst. In einer weiteren Ausführungsform könnte auch analog zu Figur 4b zusätzlich ein zweites Sensorsystem 15 vorgesehen sein mit entsprechenden Sensoren im Bereich der Sensoren 14a bis 14d, um auch hier einen Crosscheck der jeweiligen Sensorsignale zu ermöglichen.

Denkbar wäre jedoch auch eine Ausführungsform des Transportfahrzeugs 1, bei welcher beispielsweise mittig an der Rückseite 1d des Transportfahrzeugs 1, insbesondere des Anhängers, ein Sensor angebracht ist, der ein weiterer Sensor des Sensorsystems 14 oder ein Sensor eines zusätzlichen zweiten Sensorsystems 15 sein kann, um den Detektionsbereich 28 um das gesamte Transportfahrzeug 1 herum zu erweitern.

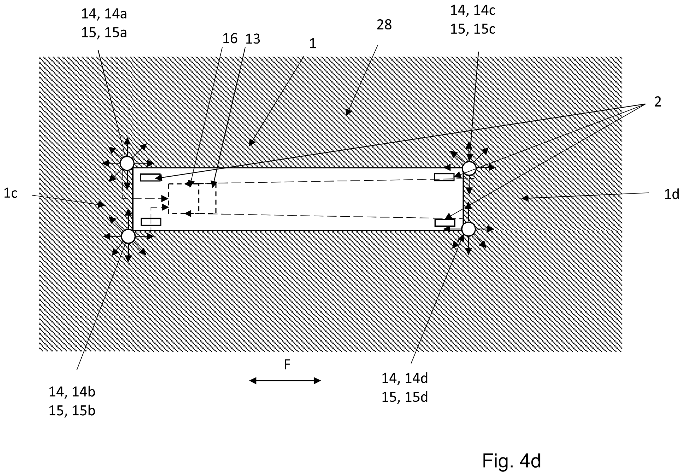

Um einen solchen, jede Fahrzeugseite (Vorderseite 1c, Rückseite 1d, rechte/linke Längsseite) abdeckenden Detektionsbereich 28 zu erreichen können auch vier Sensoren 14a bis 14d des ersten Sensorsystems 14 an den vier Ecken des Transportfahrzeugs 1 angeordnet werden. Dies ist in Figur 4d exemplarisch anhand eines Transportfahrzeugs 1 dargestellt, das im Sinne der obigen Definition und insbesondere wie auch in Figur 1a abgebildet als Containertransportfahrzeug ausgebildet ist und dementsprechend insbesondere keinen Anhänger umfasst. Dadurch ergibt sich ein um das gesamte Transportfahrzeug 1 herum erweiterter, insbesondere an jeder Fahrzeugseite überlappender, Detektionsbereich 28 des Sensorsystems 14. Dargestellt ist in Figur 4d ebenfalls das optionale zweite Sensorsystem 15, dessen Sensoren 15a bis 15d ebenfalls im Bereich der Ecken des Transportfahrzeugs 1 angeordnet sind, womit entsprechende Crosschecks zwischen Sensorsignalen verschiedener Sensorsysteme 14 bzw. 15 möglich sind.

Jede Fahrzeugseite des Transportfahrzeugs 1 kann somit vom Detektionsbereich 28 abgedeckt werden, indem jeweils mindestens ein Sensor eines Sensorsystems pro Fahrzeugseite oder pro Ecke des Transportfahrzeugs 1 angeordnet ist. Wie vorliegend exemplarisch dargestellt können selbstverständlich auch mehrere Sensoren je Fahrzeugseite oder Ecke vorgesehen sein. Die Sensoren können dabei in einem einzigen Sensorsystem 14 zusammengefasst oder in mindestens zwei Sensorsysteme 14, 15 aufgeteilt sein, und dann im jeweiligen Systemverbund an das Kollisionsvermeidungssteuerungssystem 16 angeschlossen sein. Dies gilt für sämtliche der vorliegenden Ausführungsbeispiele. Sofern in den vorliegend dargestellten Beispielen Sensoren an dem Anhänger bzw. Auflieger 1b angeordnet sind, können diese in gleicher Weise alternativ oder zusätzlich an der Rückseite der Zugmaschine 1a angeordnet werden, um in deren Betrieb ohne Anhänger dieselbe Funktionalität zu erreichen wie bei dem beispielhaft dargestellten Sattelzug. Dies gilt ebenso, wenn das Transportfahrzeug 1 im Sinne der obigen Definition als Containertransportfahrzeug (siehe Figuren 1a, 4d und 5b) oder Portalhubgerät und jeweils ohne Anhänger ausgebildet ist.

Die Figuren 5a und 5b zeigen typische Betriebssituationen, die in einem Betriebsbereich, beispielsweise innerhalb der Terminals 9 aus Figur 2 beziehungsweise 2a, vorkommen können, insbesondere im Mischverkehr zwischen automatisch und manuell geführten Transportfahrzeugen 1 und 17a, 17b. Dabei kommen Fahrsituationen mit Geradeausfahrten sowie Kurvenfahrten vor.

Figur 5a zeigt eine Längsgasse L zwischen zwei benachbarten Lagerbereichen 20a, in der eine erste Fahrspur 24a und als Übergabespur eine parallele zweite Fahrspur 24b vorgesehen ist. Beide Fahrspuren 24a, 24b sind exemplarisch als gleichgerichtete Einbahnstraße definiert. Außerdem ist beispielhaft eine Person 18 dargestellt, die sich auf der zweiten Fahrspur 24b hinter dem hier geradeaus fahrenden Transportfahrzeug 1 befindet und vom Sensorsystem 14 als Objekt im rückwärtigen Detektionsbereichs 28 erkannt wird. Zur besseren Übersichtlichkeit ist der Detektionsbereich 28 bei den in einer Kurvenfahrt befindlichen Transportfahrzeugen 1 in den Figuren 5a und 5b nicht dargestellt.

Im Rahmen des Mischverkehrs drohen auch Kollisionen zwischen automatisch geführten und manuell geführten Transportfahrzeugen 1 und 17a, 17b. Die automatisch geführten Transportfahrzeuge 1 erhalten von einem Leitsystem ihre Fahrtrouten und werden dementsprechend automatisch innerhalb der jeweils zugewiesenen Fahrspuren 24a oder 24b geführt. Die Fahrtrouten einschließlich der hierfür erforderlichen Fahrmanöver der gesamten Flotte automatisch geführter Transportfahrzeuge 1 ist also bekannt. Demgegenüber ist allerdings nicht bekannt, wie sich in einem Mischverkehr manuell geführte Transportfahrzeuge 17a, 17b beziehungsweise deren Fahrer als nächstes verhalten und bewegen werden. Zwar erhalten auch die manuell geführten Fahrzeuge 17a, 17b, bspw. von dem Leitsystem vorgegebene, Fahrtouten insbesondere innerhalb zugewiesener Fahrspuren 24a oder 24b die dem Fahrer beispielsweise grafisch oder akustisch vorgegeben werden können. Es ist jedoch immer möglich, dass ein Fahrer mit seinem manuell geführten Transportfahrzeug 17a, 17b von der vorgegebenen Fahrtroute abkommt, die zugewiesene Fahrspur verlässt und auf die benachbarte Fahrspur wechselt oder sonstige Vorgaben ignoriert. Auch können sich automatisch und manuell geführte Transportfahrzeuge 1, 17a, 17b in Kreuzungsbereichen der Fahrspuren 24a, 24b begegnen, so dass Kollisionen drohen, insbesondere wenn sich die Fahrer nicht an die Vorgaben des Leitsystems halten.

Angesichts dieser Unsicherheit ist insbesondere bei einem Mischverkehr zwischen automatisch geführten Transportfahrzeugen 1 und manuell geführten Transportfahrzeugen 17a, 17b beziehungsweise im Betrieb des Transportfahrzeugs 1 auch im Hinblick auf die nie ganz auszuschließende Anwesenheit einer Person 18 in der Nähe des Fahrbereichs des Transportfahrzeugs 1 das Risiko von Kollisionen zu minimieren. Zu diesem Zweck sind die automatisch geführten Transportfahrzeuge 1 jeweils mit zumindest einem Sensorsystem wie beispielsweise dem Sensorsystem 14 zur Objekterkennung ausgestattet, welches zumindest einen der Sensoren 14a, 14b, 14c und 14d oder weitere Sensoren darüber hinaus aufweisen kann. Es können auch weitere Sensorsysteme wie beispielsweise das zweite Sensorsystem 15 aus den obigen Ausführungsbeispielen vorgesehen sein; der Einfachheit halber wird im Folgenden jedoch nur das Sensorsystem 14 erwähnt.

Mittels des Sensorsystems 14 können als Objekte andere Transportfahrzeuge 1, 17a, 17b oder Personen 18 erkannt werden, die sich im Bereich der Fahrspuren 24a, 24b aufhalten und in den Detektionsbereich 28 gelangen. Auch andere Objekte wie beispielsweise Bestandteile von Umschlaggeräten wie die Stützen und Fahrwerke von Portalkranen 21 oder Containerbrücken 23 sowie ortsfeste Begrenzungen und Lichtmasten können so erkannt werden. Auch eine Position, Orientierung, Geschwindigkeitsvektor (Bewegungsrichtung und/ Geschwindigkeit) sowie Größe des erkannten Objekts lässt sich mittels des Sensorsystems 14 als Information über das Objekt ermitteln. Die ermittelte Position kann ein Abstand zu dem ermittelnden Transportfahrzeug 1 sein. Die beispielsweise als Lasersensor, Lidarsensor, Kamera, Radarsensor oder Ultraschallsensor ausgebildeten Sensoren des jeweiligen Sensorsystems 14 übermitteln die vorgenannten Informationen repräsentierende Signale an das Kollisionsvermeidungssteuerungssystem 16, insbesondere dessen Steuerungseinheit 16a, und/oder die Fahrzeugsteuerung 13, so dass eine Art Umfeldmodell des Transportfahrzeugs 1 erzeugt werden kann, wozu je Transportfahrzeug 1 eine Auswerteeinheit, insbesondere als Teil des Kollisionsvermeidungssteuerungssystem 16, vorgesehen sein kann.

Zur Vermeidung von Kollisionen wirkt die Fahrzeugsteuerung 13 über das Kollisionsvermeidungssteuerungssystem 16 mit dem Sensorsystem 14 zusammen, um Informationen über ein erkanntes Objekt und eine Betriebssituation des Transportfahrzeugs 1 zu gewinnen und dann in Abhängigkeit der von Informationen über ein erkanntes Objekt und eine Betriebssituation des Transportfahrzeugs 1 zu entscheiden, ob zur Kollisionsvermeidung eine Veränderung der Geschwindigkeit und/oder Fahrtrichtung des Transportfahrzeugs 1 zu veranlassen ist. Vorzugsweise werden dazu die Informationen zumindest teilweise vom Kollisionsvermeidungssteuerungssystem 16 und zumindest die Informationen über das erkannte Objekt aus Signalen des ersten Sensorsystems 14a gewonnen.

Bei einem in Figur 5a abgebildeten Wechsel zwischen den parallelen Fahrspuren 24a, 24b kommt das Sensorsystem 14 ebenfalls wie oben beschrieben zum Einsatz, um eine Kollision des Transportfahrzeugs 1 beispielsweise mit einem Transportfahrzeug 17a, 17b oder dem Portalkran 21 zu vermeiden. Dies gilt ebenso, wenn automatisch geführte Transportfahrzeuge 1 wie in Figur 5b dargestellt in einen Kreuzungsbereich einer Längsgasse L und einer Quergasse Q einfahren, um diesen für eine Weiterfahrt als Geradeausfahrt in derselben Fahrspur derselben Längsgasse L zu passieren oder in die Quergasse Q und eine dortige Fahrspur abzubiegen. Der mittels des Sensorsystems 14 erkennbare beziehungsweise beobachtbare kreuzende Querverkehr im Rahmen des Mischverkehrs kann auch mehrspuriger Gegenverkehr sein. Derartiger Gegenverkehr ist auch in den Quergassen Q zwischen zwei Kreuzungsbereichen denkbar.

In den beispielhaft dargestellten Betriebssituationen können Kollisionen mittels der Erfindung verhindert werden und zugleich unnötige Bremsvorgänge vermieden werden. Mittels des entsprechend am Transportfahrzeug 1 angeordneten Sensorsystems 14 sind nicht nur in Fahrtrichtung F vor dem Transportfahrzeug 1 befindliche Objekte detektierbar, sondern prinzipiell an jeder Seite des Transportfahrzeugs 1, insbesondere an der Vorderseite 1c, der Rückseite 1d und beiden Längsseiten. Dadurch kann insbesondere beim Abbiegen oder Wechsel von Fahrspuren auch rückwärtiger Verkehr als Objekt erkannt werden und eine Kollision hiermit vermieden werden. Zu diesem Zweck kann jede Seite des Transportfahrzeugs 1 in den Detektionsbereich 28 einbezogen werden, indem zumindest das erste Sensorsystem 14 eine ausreichende Anzahl und Anordnung von Sensoren aufweist.

Die Figuren 5a und 5b veranschaulichen auch, dass insbesondere je nach Betriebssituation des Transportfahrzeugs 1, nur ein als Untersuchungsbereich 28a vordefinierter Teilbereich des Detektionsbereichs 28 des Sensorsystems14 für die Entscheidungsfindung des Kollisionsvermeidungssteuerungssystems 16 als relevant betrachtet werden kann, und damit unterschieden wird, ob sich ein im Detektionsbereich 28 befindliches und somit erkanntes Objekt innerhalb oder außerhalb des Untersuchungsbereichs 28a befindet. Der Untersuchungsbereich 28a kann insbesondere situationsabhängig angepasst und dabei auf den für ein bevorstehendes Fahrmanöver benötigten Raum beschränkt werden. Für eine Geradeausfahrt außerhalb von Kreuzungsbereichen kann beispielsweise der Untersuchungsbereich 28a so definiert sein, dass er sich nur in Fahrtrichtung F vor dem Transportfahrzeug 1 und hierbei insbesondere nicht über die entsprechend dem aktuellen Fahrmanöver im Rahmen der aktuellen Fahrtroute genutzten bzw. zu nutzenden Fahrspur 24b hinaus erstreckt. Dabei kann weiter vorgesehen sein, dass eine Veränderung der Geschwindigkeit und/oder Fahrtrichtung des Transportfahrzeugs 1 erst oder nur dann veranlasst wird, wenn sich ein erkanntes Objekt innerhalb des Untersuchungsbereichs 28a befindet. Die Position der Person 18 in Figur 5a und die Positionen des Portalkrans 21 in den Figuren 5a und 5b sind somit jeweils unkritisch, da sie zwar innerhalb des Detektionsbereichs 28 liegen und somit vom Sensorsystem 14 als Objekt erkannt werden, aber außerhalb des für die vorliegende Betriebssituation bzw. Fahrsituation definierten Untersuchungsbereichs 28a.

Für eine Kurvenfahrt zum Spurwechsel kann der Untersuchungsbereich 28a so definiert sein, dass er sich in Fahrtrichtung und Kurvenrichtung vor und neben dem Transportfahrzeug 1 erstreckt insbesondere innerhalb der aktuellen und/oder zukünftigen Fahrspur 24a bzw. 24b.

Im Sinne einer situationsabhängigen Anpassung des Untersuchungsbereichs 28a kann als Information über die Betriebssituation auch berücksichtigt werden, dass bei einer Geradeausfahrt durch einen Kreuzungsbereich zum Überqueren einer Fahrspur als Raum nicht nur die aktuelle Fahrspur, sondern auch die zu überquerende Fahrspur, insbesondere rechts und links der aktuellen Fahrspur, mit in den Untersuchungsbereich 28a einzubeziehen ist (siehe Figur 5b). Darüber hinaus kann hierbei als weiterer Teilbereich des Detektionsbereichs 28 ein Freie-Sicht-Bereich 28b zu beiden Seiten rechts und links der aktuellen Fahrspur definiert werden, wobei dann eine Veränderung der Geschwindigkeit und/oder Fahrtrichtung des Transportfahrzeugs 1 veranlasst wird, wenn sich ein erkanntes Objekt, beispielsweise ein Container 12. zwischen dem Transportfahrzeug 1 und dem Untersuchungsbereich 28a befindet.

Die erfindungsgemäß ausgestatteten Transportfahrzeuge 1 können somit nicht nur eine kontinuierliche Umgebungsbeobachtung und Umgebungsauswertung, sondern auch eine Berücksichtigung der jeweiligen Betriebssituation ausführen sowie eine darauf basierende Kollisionsvermeidung. Dies ermöglicht einen sicheren koordinierten Mischverkehr von mindestens zwei Transportfahrzeugen 1 und 17a beziehungsweise 17b im oben beschriebenen Sinne.

Das vorliegend beispielhaft als Sattelzug mit einer auch als Terminal Truck bezeichneten Zugmaschine 1a und einem Anhänger ausgebildete Transportfahrzeug 1 kann alternativ auch als symmetrisches Containertransportfahrzeug (siehe Figuren 1a, 4d und 5b) oder Portalhubgerät im Sinne der obigen Definition ausgebildet sein. Ein solches Containertransportfahrzeug weist dann wie insbesondere in Figur 1a dargestellt ebenfalls eine von zueinander beabstandeten Führungselementen 11a begrenzte Ladefläche 11 auf und kann insbesondere aufgrund des symmetrischen Aufbaus gleichartig vorwärts und rückwärts fahren. Die Führungselemente 11a führen einen aufzunehmenden Container 12 beziehungsweise dessen Eckbeschläge auf die Ladefläche 11. Hierfür erstrecken sich die Führungselemente 11a mit ihren Führungsflächen schräg nach außen und oben von der Ladefläche 11 weg, wobei die Führungselemente 11a relativ zur Ladefläche 11 angeordnet sein können wie im Zusammenhang eines Sattelzugs anhand von Figur 1 anhand beschrieben. Die Ladefläche 11 kann hierbei auch als Teil einer heb- und senkbaren Hubplattform ausgebildet sein. Darüber hinaus gelten die Ausführungen zum Sattelzug und insbesondere diesbezügliche Bezugszeichen dann für diese anderen Fahrzeugtypen entsprechend, insbesondere hinsichtlich der Anordnung der Sensorsysteme 14 bzw. 15, die dann vollständig am Containertransportfahrzeug bzw. Portalhubgerät angeordnet sind, da keine Aufteilung auf Zugmaschine 1a und Anhänger mehr möglich bzw. erforderlich ist. Prinzipiell kann die gesamte Flotte der internen Transportfahrzeuge 1, 17a in dem Terminal 9 nur einen der vorgenannten Fahrzeugtypen, also beispielsweise nur Terminal Trucks, oder auch mehrere verschiedene Fahrzeugtypen, also beispielsweise Terminal Trucks und Portalhubgeräte oder Containertransportfahrzeuge und Portalhubgeräte, umfassen.

### Bezugszeichenliste

- 1: Transportfahrzeug
- 1a: Zugmaschine
- 1b: Auflieger
- 1c: Vorderseite
- 1d: Rückseite
- 2: Rad
- 3: Flurfläche
- 4a: erste Achse
- 4b: zweite Achse
- 4c: dritte Achse
- 5: Fahrerkabine
- 6: Fahrgestell
- 7: Sattelplatte
- 8: Batterie
- 9: Terminal
- 10: Rahmen
- 11: Ladefläche
- 11a: Führungselement
- 12: Container
- 13: Fahrzeugsteuerung
- 14: erstes Sensorsystem zur Objekterkennung
- 14a: erster Sensor des ersten Sensorsystems
- 14b: zweiter Sensor des ersten Sensorsystems
- 14c: dritter Sensor des ersten Sensorsystems
- 14d: vierter Sensor des ersten Sensorsystems
- 15: zweites Sensorsystem zur Objekterkennung
- 15a: erster Sensor des zweiten Sensorsystems
- 15b: zweiter Sensor des zweiten Sensorsystems
- 15c: dritter Sensor des zweiten Sensorsystems
- 15d: vierter Sensor des zweiten Sensorsystems
- 16: Kollisionsvermeidungssteuerungssystem
- 16a: erste Steuerungseinheit
- 16b: zweite Steuerungseinheit
- 17a: internes manuell geführtes Transportfahrzeug
- 17b: externes manuell geführtes Transportfahrzeug
- 18: Person
- 19: Begrenzung
- 19a: Passierbereich
- 20: Containerlager
- 20a: Lagerbereich
- 21: Portalkran
- 22: Schiff
- 23: Containerbrücke
- 24a: erste Fahrspur
- 24b: zweite Fahrspur
- 25: Leitelement
- 26: Schienenbahn
- 27: Übergabebereich
- 28: Detektionsbereich
- 28a: Untersuchungsbereich
- 28b: Freie-Sicht-Bereich
- F: Fahrtrichtung
- L: Längsgasse
- Q: Quergasse

## Patentansprüche

1. Transportfahrzeug (1) für Container (12), das automatisch führbar ist und hierfür eine Fahrzeugsteuerung (13) aufweist, mittels derer eine Geschwindigkeit sowie eine Fahrtrichtung des Transportfahrzeugs (1) steuerbar sind, wobei das Transportfahrzeug (1) zumindest ein erstes Sensorsystem (14) zur Objekterkennung aufweist, das mit der Fahrzeugsteuerung (13) derart zusammenwirkt, dass in Abhängigkeit von Signalen des ersten Sensorsystems (14) eine Geschwindigkeit und/oder Fahrtrichtung des Transportfahrzeugs (1) automatisch veränderbar ist, **dadurch gekennzeichnet, dass** das Transportfahrzeug (1) zusätzlich zur Fahrzeugsteuerung (13) ein Kollisionsvermeidungssteuerungssystem (16) aufweist, das eingerichtet ist, um in Abhängigkeit von Informationen über ein erkanntes Objekt (1, 17a, 17b, 18) und eine Betriebssituation des Transportfahrzeugs (1) zu entscheiden, ob zur Kollisionsvermeidung eine Veränderung der Geschwindigkeit und/oder Fahrtrichtung des Transportfahrzeugs (1) zu veranlassen ist.

2. Transportfahrzeug (1) nach dem vorherigen Anspruch, **dadurch gekennzeichnet, dass** das Kollisionsvermeidungssteuerungssystem (16) eingerichtet ist, um als Veränderung eine maximal zulässige Geschwindigkeit und/oder eine kollisionsvermeidende Fahrtrichtung vorzugeben und das Einhalten der Vorgabe zu überwachen, wozu das Kollisionsvermeidungssteuerungssystem (16) vorzugsweise eine erste Steuerungseinheit für die jeweilige Vorgabe und eine zweite Steuerungseinheit, vorzugsweise in Form einer Sicherheitssteuerung, zur Überwachung des Einhaltens der jeweiligen Vorgabe umfasst.

3. Transportfahrzeug (1) nach einem der vorherigen Ansprüche, **dadurch gekennzeichnet, dass** eine Veränderung der Geschwindigkeit und/oder Fahrtrichtung des Transportfahrzeugs (1) in Abhängigkeit davon veranlasst wird, ob sich das erkannte Objekt (1, 17a, 17b, 18) innerhalb oder außerhalb eines Untersuchungsbereichs (28a) befindet, wobei der Untersuchungsbereich (28a) ein vordefinierter Teilbereich eines Detektionsbereichs (28) zumindest des ersten Sensorsystems (14) ist.

4. Transportfahrzeug (1) nach dem vorherigen Anspruch, **dadurch gekennzeichnet, dass** der Untersuchungsbereich (28a) situationsabhängig angepasst wird, wobei der Untersuchungsbereich (28a) vorzugsweise beschränkt wird auf den für ein bevorstehendes Fahrmanöver benötigten Raum, insbesondere unter Berücksichtigung der Trajektorie des Transportfahrzeugs (1) während des Fahrmanövers und der hierbei zumindest teilweise belegten Fahrspur(en), womit sich der Untersuchungsbereich (28a) insbesondere bei einer Geradeausfahrt nur in Fahrtrichtung vor dem Transportfahrzeug (1) und bei einer Kurvenfahrt nur in Fahrtrichtung und Kurvenrichtung vor und neben dem Transportfahrzeug (1) erstreckt.

5. Transportfahrzeug (1) nach einem der Ansprüche 3 oder 4, **dadurch gekennzeichnet, dass** eine Veränderung der Geschwindigkeit und/oder Fahrtrichtung des Transportfahrzeugs (1) erst oder nur dann veranlasst wird, wenn sich ein erkanntes Objekt (1, 17a, 17b, 18) innerhalb des Untersuchungsbereichs (28a) befindet.

6. Transportfahrzeug (1) nach einem der Ansprüche 3 oder 4, **dadurch gekennzeichnet, dass** eine Veränderung der Geschwindigkeit und/oder Fahrtrichtung des Transportfahrzeugs (1) veranlasst wird, wenn sich ein erkanntes Objekt (1, 17a, 17b, 18) zwischen dem Transportfahrzeug (1) und dem Untersuchungsbereich (28a) befindet, insbesondere in einem als Teilbereich des Detektionsbereich (28) definierten Freie-Sicht-Bereich (28b).

7. Transportfahrzeug (1) nach einem der Ansprüche 3 bis 6, **dadurch gekennzeichnet, dass** in einer Speichereinheit des Transportfahrzeugs (1) eine Karte eines vordefinierten, vorzugsweise abgegrenzten, Betriebsbereichs für das Transportfahrzeug (1) gespeichert ist, und das Kollisionsvermeidungssteuerungssystem (16) eingerichtet ist, um in Abhängigkeit einer Position des Transportfahrzeugs (1) relativ zu der Karte und/oder in Abhängigkeit eines beabsichtigten Fahrmanövers und/oder in Abhängigkeit der am Ort des beabsichtigten Fahrmanövers geltenden Verkehrsregeln den Untersuchungsbereich (28a) anzupassen.

8. Transportfahrzeug (1) nach einem der vorherigen Ansprüche, **dadurch gekennzeichnet, dass** mehrere Sensoren (14a, 14b, 15a, 15b) zur Objekterkennung vorgesehen sind und das Kollisionsvermeidungssteuerungssystem (16), insbesondere dessen jeweilige Steuerungseinheit (16a, 16b) und/oder Auswerteeinheit, eingerichtet ist, um zu prüfen, ob zumindest zwei der Sensoren (14a, 14b, 15a, 15b) dasselbe Objekt (1, 17a, 17b, 18) detektieren, insbesondere innerhalb einer vordefinierten Toleranz hinsichtlich der Position dessen Orientierung und/oder dessen Geschwindigkeitsvektor und/oder Größe und/oder Zeit.

9. Transportfahrzeug (1) nach einem der vorherigen Ansprüche, **dadurch gekennzeichnet, dass** mindestens ein zweites Sensorsystem (15) zur Objekterkennung vorgesehen ist, vorbei vorzugsweise jeder Sensor (14a, 14b) des ersten Sensorsystems (14) von einem ersten Typ ist und jeder Sensor (15a, 15b) des zweiten Sensorsystems (15) von einem zweiten Typ ist, der von dem ersten Typ verschieden ist.

10. Verfahren zum Betreiben eines Transportfahrzeugs (1) nach einem der vorherigen Ansprüche, **dadurch gekennzeichnet, dass** von einem zusätzlich zur Fahrzeugsteuerung (13) vorgesehenen Kollisionsvermeidungssteuerungssystem (16) des Transportfahrzeugs (1) in Abhängigkeit von Informationen über ein erkanntes Objekt (1, 17a, 17b, 18) und eine Betriebssituation des Transportfahrzeugs (1) entschieden wird, ob zur Kollisionsvermeidung eine Veränderung der Geschwindigkeit und/oder Fahrtrichtung des Transportfahrzeugs (1) zu veranlassen ist, wobei vorzugsweise die Informationen zumindest teilweise vom Kollisionsvermeidungssteuerungssystem (16) und zumindest die Informationen über das erkannte Objekt (1, 17a, 17b, 18) aus Signalen des ersten Sensorsystems (14) gewonnen werden.
